# EUROPÄISCHE PATENTANMELDUNG

(11) **EP 3 957 163 A1**
(43) Veröffentlichungstag der Anmeldung: **23.02.2022**
(21) Anmeldenummer: 21191718.2
(22) Anmeldetag: 17.08.2021
(51) Int. Cl.: A01G 13/02, A01M 29/12

(54) **VERBISSSCHUTZVORRICHTUNG**

(30) Priorität: 19.08.2020 DE 102020121739; 23.12.2020 DE 102020134891; 01.04.2021 DE 202021101762 U
(71) Anmelder: Meyerhuber, Alfred, 91522 Ansbach (DE); Walther, Hans, 91622 Rügland (DE)
(72) Erfinder: Meyerhuber, Alfred, 91522 Ansbach (DE); Walther, Hans, 91622 Rügland (DE)
(74) Vertreter: Manitz Finsterwald Patent- und Rechtsanwaltspartnerschaft mbB

(57) **Zusammenfassung**

Ein Verbundmaterial (130) für eine Verbissschutzvorrichtung (180) hat mehrere längliche, nebeneinander angeordnete Holzelemente (131, 134, 141), mindestens einen Streifen Fasermaterial (132, 142), der die Holzelemente (131, 134, 141) kreuzend angeordnet ist, und Verbindungen (133) an den Überdeckungen der Holzelemente (131, 134, 141) und des Fasermaterials (132, 142). Die Holzelemente und das Fasermaterial und die Verbindungen sind natürlich und/oder biologisch abbaubar. Eine Verbissschutzvorrichtung (180) ist mit dem Verbundmaterial (130) gebaut und weist wenigstens eine einschlagbare Stütze (134) auf.

## Beschreibung

Die Erfindung betrifft Verbundmaterial und Flachmaterial für eine Verbissschutzvorrichtung und eine damit gefertigte Verbissschutzvorrichtung.

Verbissschutzvorrichtungen dienen dazu, Setzlinge, Schösslinge oder Triebe junger Pflanzen, insbesondere junger Bäume, vor dem Verbiss durch Wild und anderen Tieren zu schützen. In einer Bauart sind sie hüllenartige Strukturen, die den Schössling umgeben. Die Hülle kann Öffnungen aufweisen bzw. ist ein gitter- oder netzartiges Material. Die Verbissschutzvorrichtung soll in der Regel nicht das Mikroklima um die Pflanze herum beeinflussen und soll diese nur gering beschatten. Die Hülle wird über den verpflanzten Schössling gestülpt, umgibt ihn dann und wird an einem weiteren Stützpfosten, der in die Erde eingerammt ist, befestigt. Die Höhe des hüllenartigen Gebildes entspricht der Höhe, bis zu der erfahrungsgemäß eine Pflanze vor Verbiss geschützt werden muss. Sie kann z. B. 120 cm sein. Aus dieser Maßgabe ergibt sich dann auch das Erfordernis der nötigen Standzeit dahingehend, dass die Verbissschutzvorrichtung so lange bei der Pflanze wirksam sein muss, bis diese aus sich selbst heraus Wildverbiss entweder wegen ihrer zwischenzeitlichen Wuchshöhe vermeidet oder tolerieren kann. Faktisch führt dies zu Zeitdauern von einigen Jahren, während derer die Schösslinge von beispielsweise 20 cm oder 50 cm auf beispielsweise über 1 m oder 1,5 m Höhe wachsen. Für diese Zeitdauer soll die Pflanze vor Verbiss und ggf. dem Fegen geschützt sein, und dementsprechend lang soll die Verbissschutzvorrichtung ihre Funktion erfüllen. In der Praxis werden Forderungen nach fünf Jahren Standzeit erhoben.

Bisher bekannte Verbissschutzvorrichtungen der oben beschriebenen Art sind aus Kunststoffen gefertigt, die beispielsweise ein netzartiges Material bilden. Es kann schon schlauchartig/hüllenartig als sehr langes ("Endlos-") Vorprodukt gefertigt und aufgerollt sein. Von der Rolle wird es bei Verwendung abgerollt und entsprechend der gewünschten Höhe abgeschnitten.

Die DE 202019106087 U1 beschreibt eine aus vielen Einzelteilen aufgebaute Matte, die für den Verbissschutz verwendet wird und aus Holzzellulose gebaut ist.

Nachteil der beschriebenen Ausführungsform ist es, dass die Verbissschutzvorrichtungen der beschriebenen Art aus dem Wald wieder entfernt werden müssen. Dies ist per se aufwändig und in der Regel auch eine mühselige Arbeit, da sie nach einigen Jahren mit dem geschützten Schössling und/oder mit anderen Pflanzen verwachsen sind und so nur mühselig entfernt werden können.

Aufgabe der Erfindung ist es, ein Verbundmaterial und ein Flachmaterial für eine Verbissschutzvorrichtung und eine damit gefertigte Verbissschutzvorrichtung anzugeben, die nach dem Ausbringen keiner weiteren Bearbeitung mehr bedarf.

Diese Aufgabe wird mit den Merkmalen der unabhängigen Ansprüche gelöst.

Ein Verbundmaterial für eine Verbissschutzvorrichtung hat mehrere längliche, nebeneinander angeordnete Holzelementen, mindestens einen Streifen Fasermaterial, der benachbarte Holzelemente wenigstens teilweise überdeckt, und Verbindungen an den Überdeckungen der Holzelemente und des Fasermaterials. Die Holzelemente und das Fasermaterial und die Verbindungen sind natürlich (z. B. verrosten) und/oder biologisch (z. B. verrotten) abbaubar.

Ein Streifen des Fasermaterial kann mehrere Holzelemente kreuzend angeordnet sein, um diese zusammenzuhalten. Es kann aber auch je ein Streifen Fasermaterial den Freiraum zwischen zwei benachbarten Holzelementen überbrücken und diese Holzelemente selbst an ihren Rändern, aber nicht über ihre gesamte Breite überdecken, wo er befestigt wird.

Mit dem Verbundmaterial kann eine Verbissschutzvorrichtung gebaut werden. Die Holzelemente geben ihr die nötige Steifheit und Schutzfunktion. Das verbundene Fasermaterial hält die Holzelemente flexibel zusammen, so dass sie vor dem Verbau platzsparend gehandhabt werden können. Wegen der natürlichen und/oder biologischen Abbaubarkeit muss die Verbissschutzvorrichtung nicht aus dem Wald entfernt werden. Vorzugsweise enthalten das Verbundmaterial und die Verbissschutzvorrichtung keine Komponenten, die nicht natürlich und/oder biologisch abbaubar sind.

Die Holzelemente können flach ausgebildet sein und eine mittlere oder maximale Dicke haben, die unter 10 oder 5 oder 4 oder 3 oder 2 oder 1 mm liegt und die über 0,5 oder 1 oder 2 mm liegen kann, und können rechteckigen Grundriss haben. Die Holzelemente können Holzbretter und/oder Spankistenholz und/oder Schindelholz und/oder Spanplatten und/oder Schwartenteile und/oder Produktionsabfälle sein oder aufweisen. Als Schindelholz können Bretter verstanden werden, deren Holzstärke (Mittelwert oder Maximalwert) wie oben als Dicke definiert ist und vorzugsweise zwischen 1 und 5 mm liegt. Sie können im Herstellungsprozess gesägt oder gemessert oder gespalten sein und können entsprechend dem Holzfaserverlauf uneben bzw. wellig sein.

Die Holzelemente können auch Holzstäbe oder Holzruten sein oder aufweisen, deren größter Durchmesser unter 20 oder 15 oder 10 mm liegt und über 5 oder 10 mm liegen kann. Es können Weidenruten und/oder Haselruten und/oder Astwerk sein.

Die Holzelemente können unterschiedliche Längen haben. Relativ kurze können im Verbau oben liegen, so dass über den Umfang ein Schössling eher oben von vielen Holzelementen umgeben und dadurch gut geschützt ist. Längere Holzelemente können von oben bis zum Boden reichen und dort aufstehen. Womöglich noch längere Holzelemente können in den Boden eingeschlagen werden und dann also von oben bis in den Boden hinein reichen. Die Holzelemente können voneinander einen Abstand haben, der wenigstens 2 oder 5 oder 10 oder 20 oder 50 mm ist und der höchstens das Fünffache oder Dreifache oder das Doppelte der Breite eines Holzelements sein kann.

Das Fasermaterial kann Naturfasern sein oder aufweisen, insbesondere Fasern von Jute und/oder Sisal und/oder Kokos und/oder Hanf und/oder Bast und/oder Wolle und/oder Rindenstreifen und/oder Produktionsabfällen. Das Fasermaterial kann verwoben und/oder versponnen und/oder verknotet sein, insbesondere zu einem Seil und/oder zu einem Gewebe, insbesondere einem Netz. Das Fasermaterial kann aber auch wenigstens teilweise unversponnen und/oder verfilzt verwendet werden. Es kann als Matte vorliegen, an die ein oder mehrere Holzelemente angebracht sind.

Es können mehreren Streifen eines mehrere oder alle Holzelemente einer Verbissschutzvorrichtung kreuzenden Fasermaterials vorgesehen sein, die in y-Richtung beabstandet voneinander liegen und jeweils eine Breite kleiner als die Länge L eines Holzelements haben.

Es können auch mehrere in x-Richtung beabstandete Streifen Fasermaterial vorgesehen sein, die den Freiraum zwischen zwei benachbarten Holzelementen überbrücken und diese Holzelemente selbst an ihren Rändern, aber nicht über ihre gesamte Breite überdecken. Am Rand wird die Befestigung durchgeführt. Solche Streifen können sich über die gesamte Länge L (in y-Richtung) oder nur über einen Teil davon erstrecken.

Die Verbindungen zwischen Holzelemente und das Fasermaterial kann ein Klebstoff sein oder ihn aufweisen, etwa ein Leim und/oder ein Harzmaterial. Die Verbindungen kann aber auch ergänzend oder ausschließlich mechanisch sein und das Einschieben der Holzelemente zwischen Fasern des Fasermaterials sein oder aufweisen. Die Verbindung kann ergänzend oder ausschließlich mechanische Befestigungselemente aufweisen. Diese können Metallklammern aufweisen und ggf. Konter-Holzstücke. Die Klammern können Eisen aufweisen oder vollständig daraus bestehen und können unverzinkt sein.

Ein oder mehrere Holzelemente und/oder das Fasermaterial und/oder eine Verbindung können mit einem die Verwitterung beeinflussenden, insbesondere verlangsamenden Stoff und/oder mit einem Vergrämungsmittel bearbeitet und/oder bestrichen und/oder getränkt sein. Diese Stoffe sind vorzugsweise natürliche oder naturidentische Stoffe und/oder sind natürlich und/oder biologisch abbaubar. Das Fasermaterial kann mit einem seine Steifheit beeinflussenden, insbesondere erhöhenden Stoff bearbeitet und/oder bestrichen und/oder getränkt sein. Dieser Stoff ist vorzugsweise ein natürlicher oder naturidentischer Stoff oder Stoffgemisch und/oder ist natürlich und/oder biologisch abbaubar.

Eine Matte für eine Verbissschutzvorrichtung weist ein Fasermaterial auf, das natürlich und/oder biologisch abbaubar ist. Sie kann ohne daran angebrachte Holzelemente Handelsware sein. Sie kann zu einer Rolle aufgerollt sein. Oder es können an der Matte in regelmäßigen Abständen Holzelemente angebracht sein, die die Mattenkante überragen und im Einsatz nach unten zeigen und in den Boden eingeschlagen werden können. Der Abstand ergibt sich dann aus der gewünschten Anzahl dieser Einschlagstützen pro Verbissschutzvorrichtung.

Das Fasermaterial der Matte kann versponnen und/oder verwebt und/oder verknotet sein, oder es kann unversponnen und/oder verfilzt sein.

Die Matte kann schlauchartig zusammengefasst sein, wobei der Innenumfang des Schlauchs dem Innenumfang der zu fertigenden Verbissschutzvorrichtung entspricht.

Eine Verbissschutzvorrichtung weist ein Verbundmaterial und/oder eine schlauchartig zusammengefasste Matte wie oben beschrieben auf und hat wenigstens einen einschlagbaren Stützpfosten. Sie kann außerdem einen oder mehrere Stützringe aufweisen, die die schlauchartig zusammengefasste Matte offen halten. Auch die Stützringe können natürlich (z. B. durch rosten) und/oder biologisch (z. B. durch verrotten) abbaubar. Sie können aus natürlichen Ruten

Ein Flachmaterial für eine Verbissschutzvorrichtung ist vollflächig oder netz- oder gitterartig ausgebildet und weist dann zahlreiche regelmäßig und/oder unregelmäßig geformte und/oder angeordnete Öffnungen auf. Das Material ist natürlich (z. B. durch rosten) und/oder biologisch (z. B. Verwesung u. ä.) abbaubar.

Wegen seiner natürlichen bzw. biologischen Abbaubarkeit zersetzt sich das Material allmählich während seines Verbleibs im Wald bzw. am geschützten Schössling. Da es auf diese Weise abgebaut wird, ist ein nachträgliches Entfernen nicht nötig. Vorzugsweise enthalten das Flachmaterial und eine damit gebaute Verbissschutzvorrichtung keine Komponenten, die nicht natürlich und/oder biologisch abbaubar sind.

Das Flachmaterial kann bis zum vollständigen Abbau zum Verbleib an der mit ihm verbissgeschützten Pflanze geeignet sein und kann auch dafür bestimmt sein. Unter Eignung werden hier die technischen Parameter verstanden, insbesondere die Zeit hinreichender Festigkeit, um den gewünschten Verbissschutz zu gewährleisten. Unter "Bestimmtheit" des Flachmaterials wird hier die Tatsache angesprochen, dass das Material unter rechtlichen Vorgaben bis zu seiner vollständigen Zersetzung an der geschützten Pflanze verbleiben kann, soweit Bestimmungen gelten und einzuhalten sind. Gleiches kann für das beschriebene Verbundmaterial gelten.

Das Flachmaterial weist zu einem großen Teil nachwachsende Rohstoffe auf. Es kann sich hier um Holzmaterial oder um Bambusmaterial handeln. Es können hier Schälschindelholz und/oder Sägeschindelholz dieser Materialien verwendet werden und/oder Holzfeinspäne (entsprechend MDF-Platten) oder Holzspäne (entsprechend Pressspanplatten) und/oder Holzgrobspäne (entsprechend OSB-Platten). Es kann auch Holzwolle aufweisen oder Sisal oder Flachs oder ein Gemisch aus diesen Materialien. Gleiches kann für das beschriebene Verbundmaterial gelten.

Das Flachmaterial kann miteinander verbundene, insbesondere miteinander verleimte und/oder verklebte Einzelteile aufweisen. Die Einzelteile können Holzspänen einschließlich Holzfeinspänen oder Holzgrobspänen, vergleichsweise klein sein und zu einer größeren Fläche des Flachmaterials verklebt sein. Es können aber auch größere Flächen einstückig gebildet sein, etwa aus Schindelholzplatten, die ihrerseits wieder zu größeren Strukturen verklebt sind.

Das Flachmaterial kann Nadelholz und/oder Laubholz und/oder Bambusmaterial aufweisen, insbesondere als Schindelholz und/oder Spanmaterial. Vorzugsweise weist es Nadelholz (Kiefer, Fichte, Lärche, Tanne oder Gemisch daraus) auf, da deren Harzgehalt der Standzeit zuträglich ist. Vorzugsweise weist es nicht Buche auf. Diese Hölzer haben eine vergleichsweise geringe Witterungsbeständigkeit. Gleiches kann für das beschriebene Verbundmaterial gelten.

Das Flachmaterial kann auch Fasermaterial aufweisen, etwa Flachs und/oder Sisal und/oder Hanf und/oder Holzwolle, das geeignet und insbesondere in die gewünschte Geometrie verfilzt oder verwoben und darin geeignet fixiert ist. Es kann auch kombiniert mit den genannten Spänen oder Schindelholzen verarbeitet sein.

Das Flachmaterial kann ganz oder bereichsweise mit einem die biologische Abbaubarkeit beeinflussenden Material getränkt oder bestrichen (einseitig oder beidseitig) sein. Dieses Material kann seinerseits biologisch und/oder natürlich abbaubar sein. Es kann sich um einen natürlichen Werkstoff handeln. Es kann Harz und/oder Leinölfirnis oder Ähnliches umfassen. Gleiches kann für das beschriebene Verbundmaterial gelten.

Die Dicke des Flachmaterials kann kleiner 5 mm oder kleiner 4 mm oder kleiner 3 mm oder kleiner 2 mm sein. Sie kann größer 1 mm oder größer 2 mm sein. Die Breite des Flachmaterials kann größer 200 oder größer 300 oder größer 400 oder größer 500 mm sein und kann kleiner 1500 mm oder kleiner 1000 mm sein. Die Länge kann größer oder gleich der Breite des Flachmaterials sein. Die Breite des Flachmaterials kann so sein, dass sie der Höhe einer damit zu bildenden Verbissschutzvorrichtung entspricht. Aber auch die Länge kann so dimensioniert sein.

Das Flachmaterial kann zweilagig gefertigt sein, wobei die zwei Lagen längs zweier paralleler Kanten der Einzellagen miteinander verbunden sind. Es entsteht auf diese Weise ein schlauchartiges Gebilde, das in Verwendung aufgespreizt und dann um die zu schützende Pflanze herum aufgestellt werden kann.

Die Länge des Flachmaterials kann größer 2 m oder größer 5 m oder größer 10 m oder größer 20 m sein. Es kann längs der Längsrichtung aufgerollt sein. Dementsprechend ist es von der Rolle abrollbar und kann dann ablängbar bzw. abschneidbar sein. Das Abschneiden kann beispielsweise mittels eines Messers oder einer Schere oder einer Säge erfolgen. Gleiches kann für das beschriebene Verbundmaterial gelten.

Das Flachmaterial ist so ausgelegt, dass es unter durchschnittlichen klimatischen Bedingungen am Einsatzort eine Standzeit von über zwei oder über drei oder über vier Jahren hat, die aber unter zehn Jahren oder unter sieben Jahren oder unter fünf Jahren liegt. Die Parametrisierung des Materials kann so sein, dass es nach einem oder nach zwei Jahren Zeit am Einsatzort unter durchschnittlichen klimatischen Bedingungen am Einsatzort mindestens 5 % oder mindestens 10 % oder mindestens 20 % und vorzugsweise höchstens 60 % oder höchstens 50 % oder höchstens 40 % seines ursprünglichen Materialgewichts und/oder seiner ursprünglichen Standfestigkeit und/oder Scherfestigkeit und/oder Zugfestigkeit und/oder Biegefestigkeit aufgrund biologischen bzw. natürlichen Abbaus verloren hat. Regelmäßig wird die Abbaugeschwindigkeit so sein, dass zum Ende der nominellen Verbissschutzzeit (z. B. fünf Jahre) noch Material vorhanden ist, das dann weiter verfällt. Gleiches kann für das beschriebene Verbundmaterial gelten.

Das Flachmaterial besteht zu mindestens 70 % oder 80 % oder 90 % (Volumen) aus nachwachsenden Rohstoffen, insbesondere Holzmaterial und/oder Bambusmaterial. Der Rest kann Verleimungsmaterial und/oder Verbindungsmaterial sein, das seinerseits wieder biologisch/natürlich abbaubar sein kann, sowie Zuschlagstoffe. Gleiches kann für das beschriebene Verbundmaterial gelten.

Das Flachmaterial kann so beschaffen sein, dass es, wenn es zur Verbissschutzvorrichtung verbaut ist, die Funktion des Fegeschutzes hat. Zur Gewährleistung des Fegeschutzes ist das Flachmaterial so ausgelegt, dass es eine Barriere für das Wild darstellt, so dass das Fegen an anderen Pflanzen stattfindet. Gleiches kann für das beschriebene Verbundmaterial gelten.

Die Öffnungen des Flachmaterials nehmen jeweils mindestens 40 oder 50 oder 60 oder 70 oder 80 oder 90 % der Gesamtfläche des Materials, wie sie durch seine Außenkanten definiert ist, ein. Sie kann zwischen 45% und 55% liegen.

Wenn Öffnungen im Flachmaterial vorgesehen sind, können diese schon anfänglich in das Flachmaterial eingeformt sein, oder können nachträglich aus einem vollflächig gefertigten Material herausgestanzt oder herausgeschnitten oder herausgebrannt sein.

Eine Verbissschutzvorrichtung für Pflanzen, insbesondere für Setzlinge oder Schösslinge eines Baums, ist mit dem Flachmaterial wie oben beschrieben gebildet. Insbesondere wird sie dadurch gebildet, dass das flächige Material röhrenartig oder hüllenartig längs zweier paralleler Kanten zusammengefasst wird, sodass eine die Pflanze umgebende und anfänglich vorzugsweise auch nach oben überragende Struktur entsteht, die um die Pflanze herum ausgebracht werden und dort verbleiben kann. Gleiches kann für die Verwendung des beschriebenen Verbundmaterials gelten.

Der Grundriss kann rundlich oder ovalartig sein und sich durch die Materialsteifigkeit von selbst einstellen. Es können aber auch Sollknickstellen in das Flachmaterial eingearbeitet sein (etwa Linien geringerer Materialstärke), so dass beim Zusammenfassen der parallelen Kanten Knicke entstehen. Der Grundriss kann dann eckiger erscheinen, z. B. mit drei oder vier oder fünf oder sechs oder mehr Ecken. Gleiches kann für die Verwendung des beschriebenen Verbundmaterials gelten.

Der Durchmesser einer so gebildeten Struktur bzw. der Durchmesser eines flächengleichen Kreises dazu kann über 8 cm oder über 10 cm oder über 15 cm liegen. Er kann unter 50 cm oder unter 20 cm liegen. Die Höhe kann der Breite des Flachmaterials entsprechen. Sie kann größer als 40 cm oder größer als 60 cm oder größer als 100 cm sein. Sie kann unter 150 cm liegen. Gleiches kann für die Verwendung des beschriebenen Verbundmaterials gelten.

Das Zusammenfassen des Flachmaterials kann mit Überlapp längs der zusammengefassten Kanten oder "auf Kante" ohne Überlapp erfolgen. Durch geeignete Einrichtungen werden die Kanten beieinander gehalten. Es kann sich hierbei um Schnüre, Klammern, Stifte, Rödeldraht oder Ähnliches handeln. Vorzugsweise sind auch diese Halteeinrichtungen biologisch bzw. natürlich (Rost) abbaubar. Gleiches kann für das beschriebene Verbundmaterial gelten.

Die Verbissschutzvorrichtung kann neben der rohrartigen Struktur einen Stützpfosten aufweisen, der in den Boden einrammbar oder einschlagbar ist, also wenigstens an einem Ende beispielsweise angespitzt sein kann. Auch dieser Stützpfosten kann aus biologisch/natürlich abbaubarem Material bestehen, insbesondere aus unbehandeltem Holz. Die aus dem Flachmaterial gebildete rohrförmige oder hüllenartige Struktur wird auch an dem Stützpfosten befestigt. Dies geschieht vorzugsweise mit der gleichen Befestigungsvorrichtung, mit der auch die Kanten des Flachmaterials zusammengehalten werden. Gleiches kann für die Verwendung des beschriebenen Verbundmaterials gelten.

Die biologische bzw. natürliche Abbaubarkeit des Gesamtaufbaus kann 100% der verwendeten Materialien binnen einer bestimmten Zeit, etwa 15 oder 10 oder 8 Jahre ab dem Ausbringen, bedeuten. Sie kann, muss aber nicht alle erfassten Materialien (100 %) erfassen. Soweit Materialien verbleiben bzw. langsamer als genannt abgebaut werden, sind sie zum Verbleib an der Pflanze unkritisch und bestimmt und geeignet. Gleiches kann für das beschriebene Verbundmaterial gelten.

Eine Verbindevorrichtung hat mehrere Köpfe, die dazu ausgelegt sind, in eine Kreuzung von Holzelement und Fasermaterial und ggf. Konterholz gleichzeitig je einen Verbinder einzutreiben.

Eine Fertigungsvorrichtung für ein Verbundmaterial wie beschrieben hat eine erste Zuführvorrichtungen zum Zuführen länglicher Holzelemente zu einer Arbeitsstelle derart, dass die Holzelemente in Querrichtung quer zu ihrer Längsrichtung voneinander beabstandet sind, eine zweite Zuführvorrichtung zum Zuführen mehrerer Streifen Fasermaterials zu der Arbeitsstelle derart, dass sie sich in Querrichtung erstrecken und in Längsrichtung voneinander beabstandet sind und die zugeführten Holzelemente kreuzen, an der Arbeitsstelle eine Verbindevorrichtung zum Verbinden von Holzelement und Fasermaterial an ihrer Kreuzungsstelle, vorzugsweise wie oben beschrieben, und eine Transportvorrichtung zum Transportieren der zugeführten Holzelemente und Fasermaterialstreifen über die Arbeitsstelle hinweg und von ihr fort.

Nachfolgend werden Ausführungsformen der Erfindung bezugnehmend auf die Zeichnungen beschrieben, es zeigen:
- Fig. 1: ein Flachmaterial,
- Fig. 2 und 3: aufgerolltes Flachmaterial,
- Fig. 4 bis 7: Ausführungsformen des Flachmaterials,
- Fig. 8 und 9: eine Verbissschutzvorrichtung perspektivisch und in Schnittdarstellung,
- Fig. 10 bis 12: Einzelheiten zu Verbissschutzvorrichtungen,
- Fig. 13a bis c: ein Verbundmaterial,
- Fig. 14a und b: ein Verbundmaterial,
- Fig. 15 bis 17: Einzelheiten des Verbundmaterials,
- Fig. 18 und 19: Verbissschutzvorrichtungen mit dem Verbundmaterial oder einer Matte,
- Fig. 20: Merkmale zum Verbau einer Matte,
- Fig. 21: eine Verbissschutzvorrichtung perspektivisch,
- Fig. 22: eine Verbindung,
- Fig. 23: ein Flachmaterial,
- Fig. 24: Merkmale einer Verbindevorrichtung,
- Fig. 25: schematisch eine Fertigungsvorrichtung,
- Fig. 26: weitere Merkmale des Verbundmaterials.

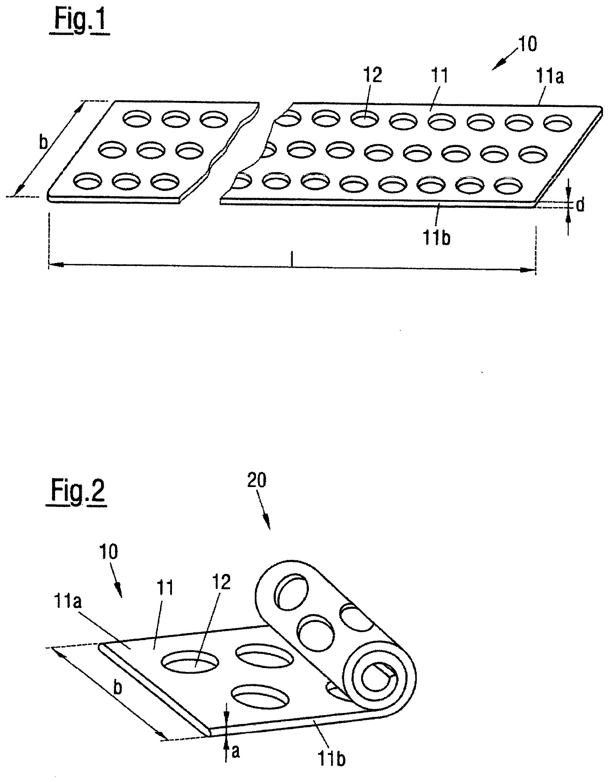

Fig. 1 zeigt schematisch perspektivisch ein Flachmaterial 10. Es hat eine Breite b, eine Länge l und eine Dicke d. Die Dicke d kann kleiner als 5 oder 4 oder 3 oder 2 mm sein. Die Breite b kann über 40 oder über 50 oder über 60 oder über 80 cm liegen. Die Länge l kann größer als die Breite b sein. Für Einzelstücke des Flachmaterials kann sie der gewünschten Höhe des aufzustellenden Verbissschutzes entsprechen. Für Rollenmaterial kann die Länge l beliebig lang bzw. unter praktischen Gesichtspunkten gewählt werden und kann beispielsweise über 2 oder über 5 oder über 10 m 5 oder über 20 m liegen. Das Flachmaterial 10 weist die eigentlichen Materialbereiche 11 auf. Darin können regelmäßige oder unregelmäßige Öffnungen 12 eingeformt sein. Mit 11a und 11b sind die gegenüberliegenden Kanten des Flachmaterials bezeichnet.

Das Flachmaterial ist biologisch bzw. natürlich abbaubar. Es kann zu einem großen Teil aus nachwachsenden Rohstoffen gefertigt sein und kann insbesondere Holz und/oder Holzspäne und/oder Holzschindeln und/oder Bambus und/oder Bambusspäne und/oder Bambusfurnier und/oder Fasern (z. B. Holzwolle, Sisal o. ä.) aufweisen. Es kann darüber hinaus ein Bindemittel aufweisen, das seinerseits biologisch/natürlich abbaubar ist. Es kann sich hier um Leim und/oder Harz und/oder Ähnliches handeln. Gleiches kann für das beschriebene Verbundmaterial gelten.

Wenn die Länge l des Flachmaterials sehr lang ist, ist es vorzugsweise dazu ausgelegt, dass bei Verwendung Einzelstücke davon abgeschnitten werden, die dann zu Verbissschutzvorrichtungen verarbeitet werden. Das Abschneiden kann mittels eines Messers, einer Schere oder einer Säge erfolgen. Wenn die Breite b des Flachmaterials 10 der gewünschten Höhe der Verbissschutzvorrichtung entspricht, ist die abzuschneidende Länge entsprechend dem Umfang der Verbissschutzvorrichtung 40 gegebenenfalls zuzüglich eines Überlapps 43 zu wählen, wenn aus dem Stück eine einzige Verbissschutzvorrichtung gefertigt werden soll. Es kann aber auch die Breite b des Flachmaterials dem Umfang gegebenenfalls zuzüglich Überlapp entsprechen, und die abzuschneidende Länge entspricht dann der gewünschten Höhe der Verbissschutzvorrichtung 40. Gleiches kann für das beschriebene Verbundmaterial gelten.

Fig. 2 zeigt aufgerolltes Flachmaterial 10. Es bildet eine Rolle 20, wie sie herstellerseitig erzeugt und in den Handel gebracht werden kann. Die Länge l des aufgerollten Flachmaterials kann dann unter praktischen Gesichtspunkten wie Gesamtgewicht, Gesamtabmessung, Anwenderbedarf und Ähnliches gewählt werden und kann über 2 oder 5 oder 10 oder 20 oder 50 m liegen. Gleiches kann für das beschriebene Verbundmaterial gelten.

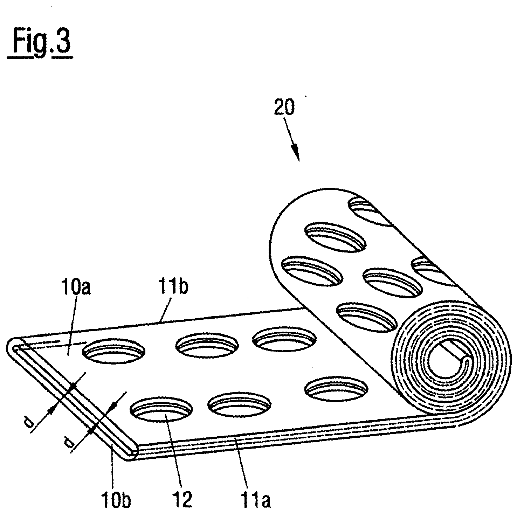

Während in Fig. 2 das Flachmaterial einlagig aufgerollt ist, zeigt Fig. 3 eine Ausführungsform, bei der das Flachmaterial 10 zweilagig gefertigt ist und so auch aufgerollt sein kann. Jede Lage 10a, 10b ist wie das Flachmaterial der Fig. 1 geformt. Die zwei Lagen 10a und 10b können längs der Längskanten 11a und 11b miteinander verbunden sein und bilden so ein schlauchartiges oder röhrenartiges oder hüllenartiges Gebilde. Wenn die Materialeigenschaften es zulassen, kann auch dieses Flachmaterial wie in Fig. 3 gezeigt zu einer Rolle 20 aufgerollt sein. Bei Benutzung wird das zweilagig liegende Material aufgespreizt und bildet dann so die die zu schützende Pflanze umgebende Verbissschutzvorrichtung 40. Gleiches kann für das beschriebene Verbundmaterial gelten.

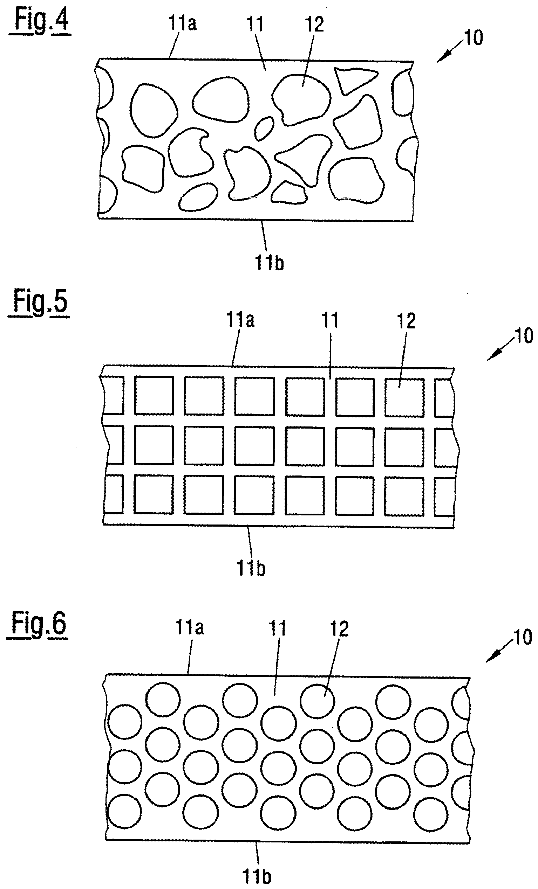

Fig. 4 zeigt ein Flachmaterial 10 mit regelmäßigen Kanten 11a, 11b, in das unregelmäßige Öffnungen 12 in das eigentliche Material 11 eingeformt sind. Die Größe und/oder die Lage der Öffnungen 12 kann unregelmäßig sein.

Allgemein können die Öffnungen 12 eine ganz oder bereichsweise eckige oder runde oder zackige Kontur haben. Die Kontur kann durch die Kontur von Spänen (z. B. Grobspänen) bestimmt sein.

Die Öffnungen können nachträglich in das eigentliche Material 11 des Flachmaterials 10 eingearbeitet werden, etwa eingestanzt oder eingeschnitten werden. Dies bietet sich insbesondere bei Verwendung von Schindelholz (ggf. auch Bambusfurnier) an. Die Öffnungen können aber auch gleich anfänglich in das Material eingeformt sein, beispielsweise dann, wenn es aus Spänen, insbesondere Feinspänen entsprechend MDF oder Grobspänen entsprechend OSB gebildet ist.

Fig. 5 zeigt eine Ausführungsform mit regelmäßig angeordneten Öffnungen 12, die auch regelmäßige, vorzugsweise gleiche Größe untereinander haben. Die Öffnungen können kantig begrenzt sein, etwa rechteckig, quadratisch, dreieckig, hexagonal oder Ähnliches.

Fig. 6 zeigt ein Flachmaterial 10 mit vorzugsweise regelmäßig angeordneten, verrundeten Öffnungen 12. Die Öffnungen 12 können kreisförmig oder oval geformt sein. Sie können regelmäßig angeordnet sein, etwa mit Mittelpunkten auf einem Dreiecksraster oder auf einem rechtwinkligen oder quadratischen Raster.

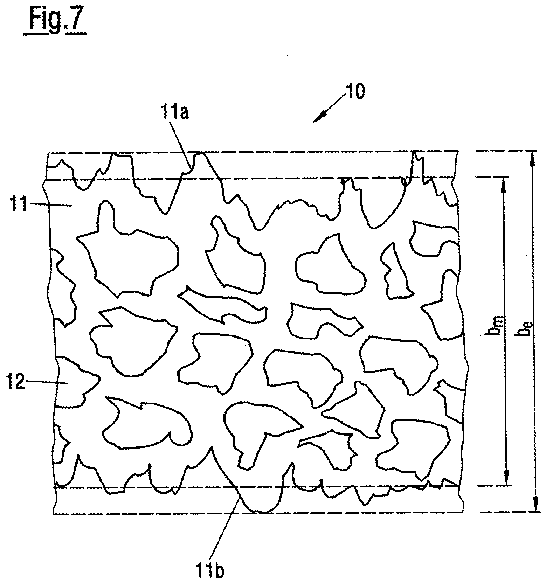

Fig. 7 zeigt Flachmaterial 10 mit unregelmäßigen Kanten 11a, 11b. Sie kann sich herstellungsbedingt ergeben, wenn das Flachmaterial 10 beispielsweise aus Holzgrobspänen gefertigt wird. Sie kann auch dann entstehen, wenn Öffnungen 12 eine Kante 11a, 11b überlappend eingearbeitet werden. Als Breite b eines solchen Materials kann das Maß bm zwischen Mittenlagen der Kanten verstanden werden oder das Maß be zwischen Extremlagen der Kanten 11a, 11b. Die Extremlage kann eine äußere Extremlage wie in Fig. 7 angedeutet sein oder eine innere Extremlage, bei der die am weitesten einwärts liegenden Stellen der Kanten 11a, 11b maßgebend sind.

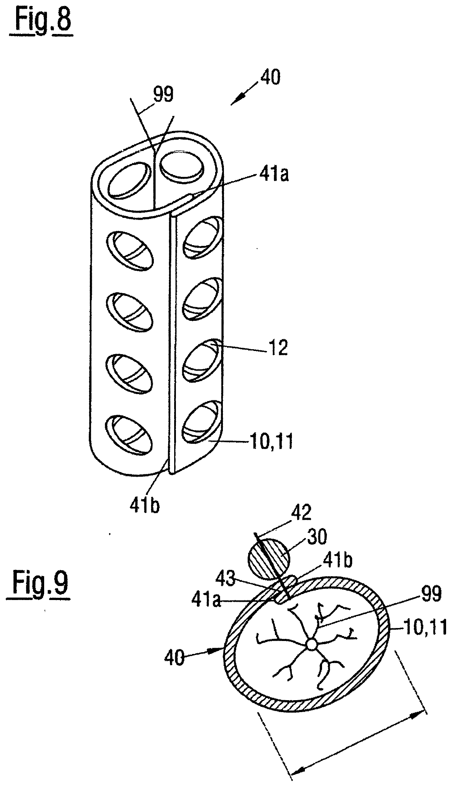

Fig. 8 zeigt eine Ausführungsform der Verbissschutzvorrichtung 40. Ein geeignet dimensioniertes Stück des Flachmaterials 10 ist rohrartig oder hüllenartig zusammengefasst und kann in dieser Weise eine Pflanze 99 umgeben und wenigstens anfänglich auch nach oben überragen. Die Öffnungen 12 im eigentlichen Material 11 sorgen dafür, dass die Pflanze 99 im Wesentlichen herkömmliche klimatische Bedingungen erfährt. Gleiches kann für das beschriebene Verbundmaterial gelten.

Die Öffnungen sind ihrer Größe nach vorzugsweise so dimensioniert, dass sie mindestens 50 % oder mindestens 60 % oder mindestens 70 oder 80 oder 90 % der Gesamtfläche des Flachmaterials 10 ausmachen, wobei die Gesamtfläche als durch die Maße der Außenkanten des Flachmaterials bzw. durch seine Nennmaße definiert verstanden werden kann.

Fig. 9 zeigt eine Verbissschutzvorrichtung 40 im Schnitt. Zusätzlich zu der in Fig. 8 gezeigten Ausführungsform weist sie einen Stützpfosten 30 auf, der vorzugsweise an der Außenseite der Hülle steht und in den Boden eingerammt werden kann. Mit 31 ist das angespitzte Ende des Stützpfostens 30 bezeichnet. Der Stützpfosten kann länger sein als die Höhe h der Verbissschutzvorrichtung 40, um nach Einrammen in den Boden eine etwa entsprechende Höhe zu haben.

Das Flachmaterial 10 ist mit Überlapp 43 längs zweier paralleler Kanten 41a, 41b zusammengefasst. Sie können den Kanten 11a, 11b in Fig. 1 entsprechen oder rechtwinklig dazu liegenden Kanten. Eine Befestigungsvorrichtung 42 hält einerseits die Kanten 41a, 41b beieinander und kann andererseits auch die Befestigung der Hülle am Stützpfosten 30 bewerkstelligen.

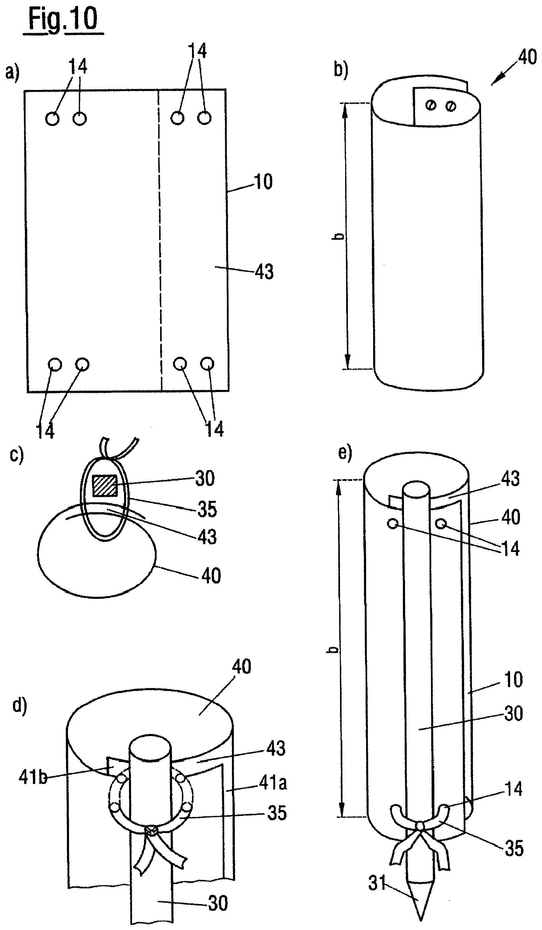

Fig. 10 zeigt verschiedene Aspekte einer Verbissschutzvorrichtung 40. Fig. 10a zeigt noch flach liegend das Flachmaterial 10, bevor es zu der in Fig. 10b gezeigten rohrartigen oder hüllenartigen Struktur zusammengefasst wird. Es sei in diesem Zusammenhang darauf verwiesen, dass auch diese und alle Ausführungsformen Öffnungen 12 wie beschrieben aufweisen können. Sie sind lediglich der Übersichtlichkeit der Darstellung halber manchmal nicht oder nicht vollständig eingezeichnet.

Der Bereich 43 rechts der gestrichelten Linie ist der Überlapp, der beim Zusammenfassen des Flachmaterials 10 entsteht. Mit 14 sind eingearbeitete Löcher bezeichnet, mittels derer das Flachmaterial zusammengefasst werden kann.

Fig. 10c zeigt schematisch im Schnitt eine Möglichkeit des Zusammenfassens des Flachmaterials 10 und der Verbindung mit dem Stützpfosten 30. Es können beispielsweise Schnüre an zwei oder mehreren Positionen in vertikaler Richtung längs des Stützpfostens einerseits durch die Öffnungen 14, die dann überlappend gelegt werden, gezogen werden. Sie können dann ggf. auch noch um den Stützpfosten 30 herum geführt und dann verknotet werden.

Die Fig. 10d und 10e zeigen das entstehende Konstrukt schematisch perspektivisch. Die Schnur 35 hält im Überlapp 43 die beiden Kanten 41a, 41b beieinander und umfasst auch den Stützpfosten 30. Das Flachmaterial 10 ist so hüllenartig zusammengefasst und wird mit Schnüren 35 an mindestens zwei Positionen längs der Höhe h der Verbissschutzvorrichtung zusammengehalten. Die Positionen können vorzugsweise am oberen und am unteren Ende der Verbissschutzvorrichtung 40 liegen. Es können aber auch an mehr als zwei Positionen Halteeinrichtungen entsprechend den Schnüren 35 vorgesehen sein. Die Fig. 10d und 10e zeigen Ausführungsformen ohne Öffnungen 12. Sie können aber die beschriebenen Öffnungen 12 aufweisen.

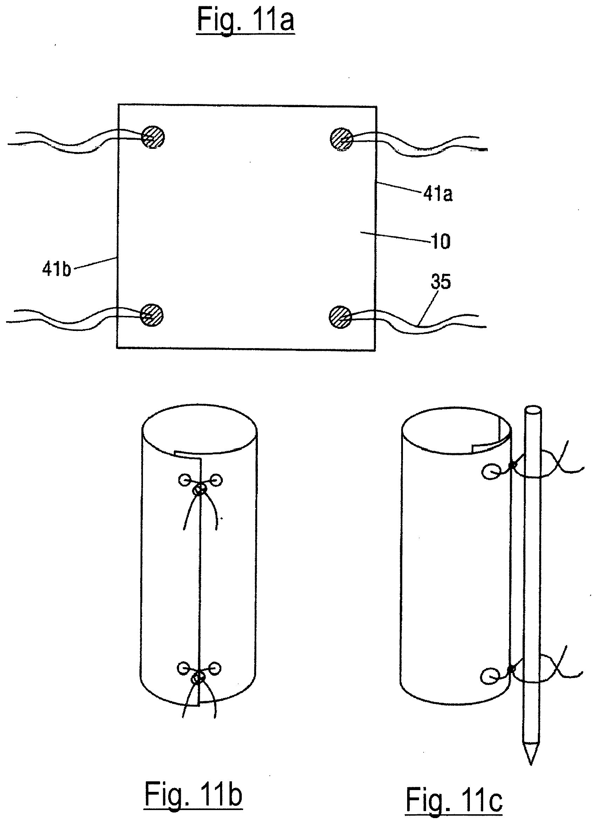

Fig. 11a bis 11c zeigen eine weitere Ausführungsform. Hier sind an gegenüberliegenden Kanten 41a Schnüre 35 auf das Flachmaterial 10 aufgeklebt. Mit ihnen kann das Flachmaterial 10 dann zur Verbissschutzvorrichtung 40 zusammengefasst werden, wie in Fig. 11b gezeigt, und kann auch am Stützpfosten 35 befestigt sein, wie in Fig. 11c gezeigt.

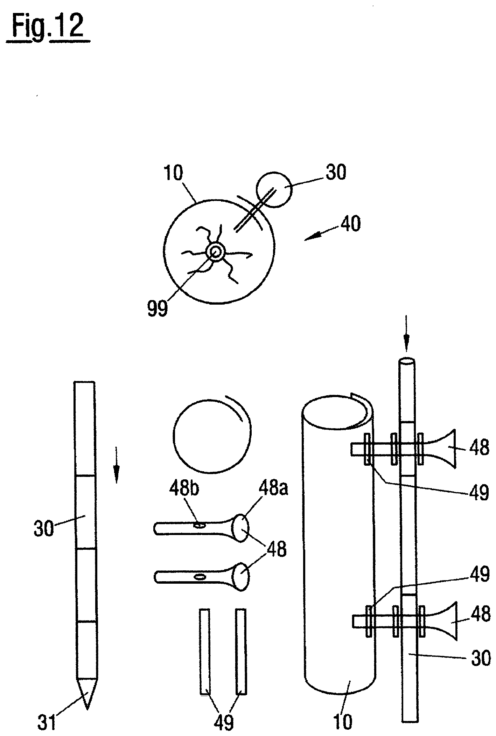

Fig. 12 zeigt eine weitere Ausführungsform der Verbissschutzvorrichtung 40. Der Stützpfosten 30 wird mit seinem spitzen Ende 31 in den Boden eingerammt. Danach wird das Flachmaterial 10 längs zweier Kanten zusammengefasst, um eine rohrartige oder hüllenartige Struktur um die Pflanze 99 herum zu bilden. Mittels eines Stifts 48, der eine Öffnung im Stützpfosten 30 durchdringt und auch Öffnungen im Überlapp 43 des Flachmaterials 10 durchdringt oder bei seinem Einfügen schafft, werden die Kanten des Flachmaterials zusammengehalten und die Hülle am Stützpfosten 30 befestigt. Mittels Sicherungsstiften 49, die in Öffnungen 48b der Stifte eingeschoben werden, wird der Verbau gesichert. Die Stifte 48 weisen einen verbreiterten Kopf 48a auf.

Das Flachmaterial und dem folgend auch die Verbissschutzvorrichtung 40 können mit einem die Haltbarkeit beeinflussenden Material ganz oder teilweise bestrichen oder durchtränkt sein. Es kann sich um Leinölfirnis oder Ähnliches handeln. Das tränkende oder zum Bestreichen verwendete Material ist vorzugsweise auch biologisch bzw. natürlich abbaubar. Insbesondere kann es so beschaffen sein, dass es die biologische Abbaubarkeit des unbehandelten Materials verlangsamt, um diese auf einen gewünschten Wert einzustellen. Das Fasermaterial kann Kokosfasern sein oder aufweisen. Das Fasermaterial, insbesondere Kokosfasern, kann mit Natur-Latex bzw. Kautschuk vermengt oder überzogen sein.

Das Flachmaterial und dem folgend auch die Verbissschutzvorrichtung 40 können mit einem mit einem Tiere vergrämenden Material ganz oder teilweise bestrichen oder durchtränkt sein. Das tränkende oder zum Bestreichen verwendete Material ist vorzugsweise ungiftig und auch biologisch bzw. natürlich abbaubar.

Die "Geschwindigkeit" des biologischen bzw. natürlichen Abbaus ist so, dass über einen gewünschten Zeitraum hinweg die Verbissschutzvorrichtung 40 den gewünschten Zweck erreicht und insbesondere deshalb die dafür notwendige Materialhaftigkeit und Materialfestigkeit aufweist. Die Auslegung kann so sein, dass bis zu dem Zeitpunkt, zu dem eine Pflanze ungeschützt stehen kann, eine einzige Verbissschutzvorrichtung ausreicht und dementsprechend für den gewünschten Zeitraum die nötige Standfestigkeit aufweist. Es kann sich hier beispielsweise um drei Jahre oder vier Jahre oder fünf Jahre oder sechs Jahre handeln. Die Auslegung kann aber auch so sein, dass davon ausgegangen wird, dass im Zeitraum, während dessen die Pflanze schutzbedürftig ist, zweimal oder mehrmals Verbissschutzvorrichtungen angebracht werden. Die Einzelstanddauern sind dann dementsprechend kürzer. Bei der Abbaugeschwindigkeit kann von mittleren klimatischen Bedingungen ausgegangen werden, wie sie am Einsatzort herrschen. Schwankungen zwischen einzelnen Exemplaren der Verbissschutzvorrichtung betreffend die Haltbarkeit können durch statistische bzw. summarisch gemittelte Betrachtungen aufgefangen werden. Gleiches kann für die Verwendung des beschriebenen Verbundmaterials gelten.

Die gewünschte Standzeit kann mittelbar durch Größen wie Standfestigkeit und/oder Scherfestigkeit und/oder Zugfestigkeit und/oder Biegesteifigkeit beschrieben werden. Die Gesamtauslegung kann so sein, dass das Material, wenn es verbaut ist, innerhalb eines bestimmten Zeitraums, beispielsweise ein Jahr oder zwei Jahre, bestimmte Änderungen durchläuft, etwa dahingehend, dass es zwischen 20 % und 50 % seines ursprünglichen Materialgewichts und/oder seiner ursprünglichen Standfestigkeit und/oder seiner Scherfestigkeit und/oder seiner Zugfestigkeit und/oder seiner Biegesteifigkeit verloren hat. Der Verlust kann über 10 % oder über 15 % oder über 20 % oder über 30 % des Ausgangswerts liegen. Er kann unter 50 % oder unter 40 % oder unter 30 % liegen. Gleiches kann für die Verwendung des beschriebenen Verbundmaterials gelten.

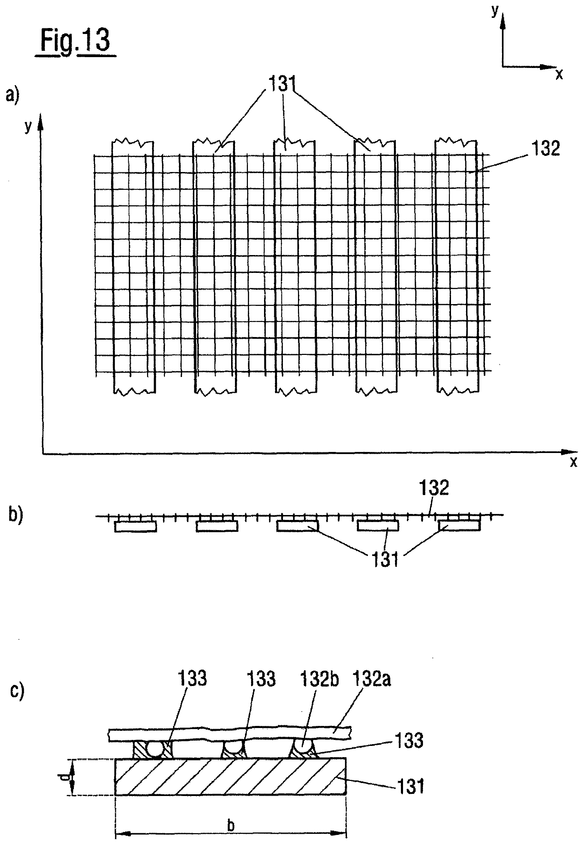

Eine nicht abschließende, nicht vollständige Darstellung möglicher Merkmalskombinationen M1 bis M17 ist:
M1. Flachmaterial (10) für eine Verbissschutzvorrichtung (40), das
   - netz- oder gitterartig ausgebildet ist und regelmäßig und/oder unregelmäßig geformte und/oder angeordnete Öffnungen (12) aufweisen kann, und
   - natürlich und/oder biologisch abbaubar ist.
M2. Flachmaterial (10) nach Merkmalskombination M1, das bis zum vollständigen Abbau zum Verbleib an der mit ihm verbissgeschützten Pflanze geeignet und bestimmt ist.
M3. Flachmaterial (10) nach Merkmalskombination M1 oder M2, das einen oder mehrere nachwachsende Rohstoffe aufweist, insbesondere Holz und/oder Schälschindelholz und/oder Sägeschindelholz und/oder Holzfeinspäne (MDF) oder Holzspäne und/oder Holzgrobspäne (OSB) und/oder Bambus.
M4. Flachmaterial (10) nach einer der vorherigen Merkmalskombinationen, das miteinander verbundene, insbesondere verleimte und/oder verklebte und/oder verwobene Einzelteile aufweist, insbesondere Späne und/oder Fasern.
M5. Flachmaterial (10) nach einer der vorherigen Merkmalskombinationen, das Nadelholz und/oder Laubholz und/oder Bambusmaterial und/oder Fasern aufweist, und vorzugsweise nicht Buche.
M6. Flachmaterial (10) nach einer der vorherigen Merkmalskombinationen, das ganz oder bereichsweise mit einem die biologische Abbaubarkeit beeinflussenden Material getränkt oder bestrichen ist.
M7. Flachmaterial (10) nach einer der vorherigen Merkmalskombinationen, das ein Dicke (d) kleiner 3 mm und/oder eine Breite (b) größer 400 mm und/oder eine Länge (l) größer oder gleich der Breite aufweist.
M8. Flachmaterial (10) nach einer der vorherigen Merkmalskombinationen, das doppellagig liegt, wobei die zwei Lagen (10a, 10b) längs beider sich in Richtung der Länge des Materials erstreckenden Kanten (11a, 11b) miteinander verbunden sind.
M9. Flachmaterial (10) nach einer der vorherigen Merkmalskombinationen, das eine Länge (l) >= 2 m aufweist und in Längsrichtung aufgerollt ist, wobei das Flachmaterial von der Rolle abrollbar und ablängbar bzw. abschneidbar ist.
M10. Flachmaterial (10) nach einer der vorherigen Merkmalskombinationen, bei der das Material so ausgelegt ist, dass es unter durchschnittlichen klimatischen Bedingungen am Einsatzort eine Standzeit über 4 Jahre und vorzugsweise unter 10 Jahre hat, und/oder so ausgelegt ist, dass es nach einem oder nach zwei Jahren Zeit am Einsatzort zwischen 20% und 50% seines ursprünglichen Materialgewichts und/oder zwischen 20% und 50 % seiner ursprünglichen Standfestigkeit und/oder Scherfestigkeit und/oder Zugfestigkeit und/oder Biegesteifigkeit verloren hat.
M11. Flachmaterial (10) nach einer der vorherigen Merkmalskombinationen, das zu mindestens 70 oder 80 oder 90 Vol.-% aus nachwachsendem Material besteht.
M12. Flachmaterial (10) nach einer der vorherigen Merkmalskombinationen, bei dem die Öffnungen (12) einen Flächenanteil von mindestens 50 oder 60 oder 70 oder 80 oder 90% der Gesamtfläche des Flachmaterials einnehmen.
M13. Flachmaterial (10) nach einer der vorherigen Merkmalskombinationen, bei dem Öffnungen (12) in das vorher vollflächige Material gestanzt oder geschnitten sind, und/oder bei dem Öffnungen (12) ursprünglich in das Material eingeformt sind.
M14. Verbissschutzvorrichtung (40) für Pflanzen, insbesondere für den Setzling (99) eines Baums, die Flachmaterial (10) nach einem der vorherigen Merkmalskombinationen aufweist.
M15. Verbissschutzvorrichtung (40) nach Merkmalskombination M14,
   bei der das Flachmaterial (10) rohrförmig strukturiert ist, insbesondere dadurch, dass zwei sich gegenüber liegenden Kanten (11a, 11b) des Flachmaterials (10) zu einer den Setzling (99) umfangenden rohrartigen Struktur mit Überlapp (43) bei den Kanten oder ohne Überlapp zusammengefasst sind.
M16. Verbissschutzvorrichtung (40) nach Merkmalskombination M15, bei der die sich ursprünglich gegenüber liegenden Kanten (11a, 11b) des Flachmaterials (10) mit einer oder mehreren Schnüren und/oder mit einer oder mehreren Klammern und/oder mit einem oder mehreren Stiften zusammengehalten sind.
M17. Verbissschutzvorrichtung (40) nach einer der Merkmalskombinationen M14 bis M16, mit einem in den Boden einschlagbaren Stützpfosten (41), an dem die mit dem Flachmaterial (10) gebildete rohrförmig Struktur befestigbar ist, insbesondere längs der sich ursprünglich gegenüber liegenden Kanten (11a, 11b) des Flachmaterials (10). Nachfolgend werden Bezug nehmend auf die Fig. 13 bis 20 weitere Merkmale und/oder Möglichkeiten und/oder Ausführungsformen beschrieben. Merkmale, die bisher Bezug nehmend auf Fig. 1 bis 12 beschrieben wurden, sind als mit den nun zu beschreibenden Ausführungsformen kombinierbar zu verstehen, soweit sie technisch kombinierbar sind und nicht im Widerspruch dazu stehen. Es sind Verweisungen zwischen den Ausführungsformen der Figuren 1 bis 12 und der Figuren 13 ff angegeben. Sie sind nicht abschließend zu verstehen. Die kreuzweise Kombinierbarkeit soll nicht auf die expliziten Verweise beschränkt sein.

Fig. 13 zeigt ein Verbundmaterial 130, das für den Bau einer Verbissschutzvorrichtung 180 geeignet ist. Mit einem schematischen Koordinatensystem x-y sind Orientierungen angedeutet. Die Richtungen x und y sind senkrecht zueinander. Im verbauten Zustand kann die y-Richtung vertikal sein und die x-Richtung horizontal bzw. zuletzt in Umfangsrichtung der Verbissschutzvorrichtung.

Das Verbundmaterial 130 weist mehrere längliche, nebeneinander angeordnete Holzelemente 131 auf. Die Holzelemente können sich längs der y-Richtung erstrecken, im Verbau also in etwa vertikal stehen, und können längs der x-Richtung, im Verbau die Umfangsrichtung, beabstandet nebeneinander liegen.

Das Verbundmaterial weist außerdem einen mehr oder minder breiten Streifen Fasermaterial 132 auf. Die Figur 13 zeigt eine Bauweise, bei der der Streifen die Holzelemente kreuzend angeordnet ist. Die Breite des Streifens (in y-Richtung) kann der Länge der Holzelemente entsprechen oder kleiner sein. Da, wo der Streifen des Fasermaterials 132 die Holzelemente überdeckt, sind Verbindungen zwischen dem jeweiligen Holzelement und dem Fasermaterial vorgesehen.

Sowohl die Holzelemente wie auch das Fasermaterial wie auch die Verbindungen zwischen ihnen sind natürlich und/oder biologisch abbaubar. Insoweit gilt das Gleiche wie das, was schon früher in dieser Beschreibung zur natürlichen und/oder biologischen Abbaubarkeit gesagt wurde. Das Verbundmaterial weist vorzugsweise keine Bestandteile auf, die nicht natürlichen Ursprungs sind und/oder die nicht natürlich und/oder biologisch abbaubar sind.

Das Verbundmaterial kann, wie in Fig. 2 gezeigt, als "Endlosware" im Handel gehandelt werden. Es kann in Fig. 13 längs der x-Richtung aufgerollt werden. Der Streifen des Fasermaterials hat eine natürliche Nachgiebigkeit entsprechend einem Seil oder einem Gewebe oder einem verfilzten Stoff und gibt somit dem Verbundmaterial eine Nachgiebigkeit für Abwinklungen um eine Achse parallel zur y-Achse in Fig. 3 herum. Auf diese Weise kann das Material in x-Richtung aufgerollt werden und kann im Verbau um eine Pflanze 99 herum gelegt werden.

Die Holzelemente 131 können flach ausgebildet sein und können eine mittlere oder maximale Dicke haben, die unter 10 oder 5 oder oder 2 oder 1 mm liegt und die über 0,5 mm oder über 1 mm liegen kann. Sie können eine Breite b und eine Länge L haben. Es können auch Holzelemente unterschiedlicher Längen L1 und L2 vorgesehen sein. Die Holzelemente können in x-Richtung einen Abstand A haben. Fig. 13b zeigt das Verbundmaterial in schematischer Seitenansicht. Unten sind stirnseitig die Holzelemente 131 zu sehen. Darüber erstreckt sich in x-Richtung der Streifen des Fasermaterials 132. Dort, wo der Streifen die Holzelemente überdeckt, sind beide miteinander verbunden.

Zum Holzmaterial gilt das, was schon weiter oben gesagt wurde. Bambus sei hier auch als Holz verstanden. Die Holzelemente können Holzbretter und/oder Spankistenholz und/oder Schindelholz und/oder Spanplatten und/oder Schwartenteile und/oder Produktionsabfälle sein oder aufweisen.

Der Abstand A zwischen nebeneinander liegenden Holzelementen 131 kann wenigstens 5 oder 10 oder 20 oder 50 mm sein. Der Abstand A kann untern 100 oder 50 oder 20 mm liegen. Wenn eine allmähliche Dimensionsänderung des die Holzelemente 131 verbindenden Fasermaterials 132 zu erwarten ist, etwa ein Schrumpfen um 20%, kann die anfängliche Breite dementsprechend vorab kompensierend gefertigt werden, etwa entsprechend der erwarteten Schrumpfung größer, z. B. um 25% größer. Der Abstand kann kleiner als das Dreifache oder das Doppelte oder Einfache der Breite b eines Holzelements sein. Die Breite b eines Holzelements kann größer als 10 oder 20 oder 30 oder 50 oder 70 mm sein. Sie kann kleiner als 150 oder 120 oder 100 oder 50 oder 20 mm sein. Die Holzelemente können regelmäßig definierte Formen haben. Sie können rechteckigen Grundriss haben. Sie können aber auch beispielsweise aus Produktionsabfällen hergestellt sein und dann beispielsweise eine definierte Länge L haben, aber ungleichmäßige und auch innerhalb eines Holzelements nicht konstante Breiten b. Als Breite b, wie sie hier angesprochen ist, gilt dann eine mittlere Breite eines Holzelements oder aller Holzelemente einer Verbissschutzvorrichtung. Das Gleiche gilt hinsichtlich der Dicke d.

Das Fasermaterial 132 besteht aus Naturfasern. Es können insbesondere Fasern von Jute und/oder Sisal und/oder Kokos und/oder Hanf und/oder Bast und/oder Wolle und/oder Rindenstreifen und/oder Produktionsabfällen sein. Das Fasermaterial kann, soweit möglich, verwoben und/oder versponnen und/oder verknotet sein. Es kann zu Seilen (gegebenenfalls mit einzelnen Kardeelen) versponnen sein. Es kann zu einem Gewebe verwoben oder verknotet sein. Es kann beispielsweise netzartig ausgebildet sein. Das Netz kann Gitteröffnungen einer Größe (Diagonale) von über 10 oder 20 oder 30 oder 50 mm aufweisen. Sie können unter 100 oder unter 50 mm liegen.

Das Fasermaterial kann aber auch unversponnen verwendet werden. Es kann verfilzt verwendet werden bzw. sein. Auch dann kann das Fasermaterial wenig füllig vorliegen. Es kann einem "chaotischen Netz" gleichen und muss nicht blickdicht sein. Es kann flachgedrückt sein, so dass es eine flache Matte bildet. Ihre Dicke, wenn sie nicht weiter komprimiert gehalten wird, kann unter 10 oder 5 mm liegen.

Fig. 13b deutet ein netzartiges Fasermaterial 132 an mit längslaufenden Fäden (x-Richtung) und quer dazu laufenden Fäden (senkrecht zur Zeichenebene), längs der Länge der Holzelemente.

Fig. 13c zeigt in größerem Detail eine Verbindung zwischen Fasermaterial 132 und Holzelement 131. Mit 132a und 132b sind längs- und querlaufende Fäden eines netzartigen Fasermaterials gezeigt. Die Verbindung hin zum Holzelement 131 wird durch eine Verklebung 133 hergestellt. Die Verklebung 133 ist vorzugsweise ein natürlicher Klebstoff, insbesondere ein natürlicher oder naturidentischer Leim oder ein Harz. Der Klebstoff ist natürlich/biologisch abbaubar.

Zur Haltbarkeit, Festigkeit, Standfestigkeit, Zugfestigkeit, Scherfestigkeit und Biegesteifheit der Holzelemente und/oder des Fasermaterials und/oder der Verbindung gilt das, was weiter oben schon zu den entsprechenden Werten der beschriebenen Materialien gesagt wurde.

Ein oder mehrere Holzelemente 131, 141 und/oder das Fasermaterial 132, 142 und/oder die Verbindungen 133 können mit einem die Verwitterung beeinflussenden, insbesondere verlangsamenden Stoff und/oder mit einem Vergrämungsmittel bearbeitet und/oder bestrichen und/oder getränkt sein. Diese Stoffe sind vorzugsweise natürliche oder naturidentische Stoffe oder Stoffgemische und/oder sind natürlich und/oder biologisch abbaubar.

Das Fasermaterial bzw. eine damit gefertigte Matte kann mit einem seine Steifheit beeinflussenden, insbesondere erhöhenden Stoff bearbeitet und/oder bestrichen und/oder getränkt und/oder vermischt sein. Dieser Stoff ist vorzugsweise ein natürlicher oder naturidentischer Stoff oder Stoffgemisch und/oder ist natürlich und/oder biologisch abbaubar.

Verschiedene Teile des Verbundmaterials können unterschiedlich schnell verrotten bzw. abbaubar sein, bspw. schon als Materialeigenschaft oder wegen unterschiedlicher Nähen verschiedener Teile zum Boden. Z. B. kann das Fasermaterial, auch wenn ggf. behandelt, schneller verwittern als die Holzelemente, auch wenn behandelt. Die genannten Werte können dann für die schneller bzw. am schnellsten verwitternden Teile gelten.

Die Holzelemente 131 und/oder einschlabgbaren Stützen 134 können Nadelholz und/oder Laubholz und/oder Bambusmaterial aufweisen, insbesondere als Schindelholz und/oder Spanmaterial. Vorzugsweise weist es Nadelholz (Kiefer, Fichte, Lärche, Tanne oder Gemisch daraus) auf, da deren Harzgehalt der Standzeit zuträglich ist. Es kann Robinie aufweisen. Vorzugsweise weist es nicht Buche auf. Diese Hölzer haben eine vergleichsweise geringe Witterungsbeständigkeit.

Die Verbissschutzvorrichtung fördert wegen ihres natürlichen Materials auf der Fläche die Entstehung eines Geflechts von Beikraut, das Böcke vom Verfegen abhält. Auch das Verwachsen der Schutzeinrichtung führt dazu, dass das Terrain um die geschützte Pflanze nicht mehr attraktiv ist für einen Fegeangriff des Rehbocks. Ein Terminaltrieb kann dann nach drei bis vier Jahren über den Äser des Rehwildes hinausgewachsen sei

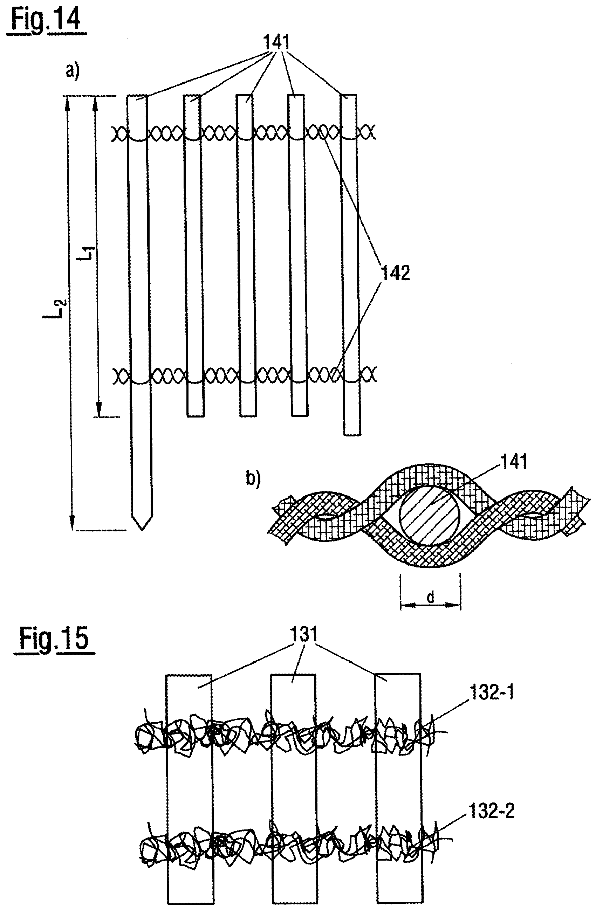

Fig. 14a zeigt ein Verbundmaterial, bei dem die Holzelemente 141 Holzstäbe oder Holzruten sind oder aufweisen. Es können verarbeitete oder natürlich gewachsene Stäbe und/oder Ruten und/oder Äste sein. Ihr jeweils größter Durchmesser kann unter 30 oder 20 oder 15 oder 10 mm liegen. Er kann über 10 oder 5 mm liegen. Bei nicht kreisförmigen Querschnittsformen ist der Durchmesser eines Kreises mit gleicher Fläche zum größten Flächenquerschnitt zu nehmen. Die Stäbe oder Ruten können Weidenruten und/oder Haselruten und/oder Astwerk und/oder Produktionsabfälle sein oder aufweisen. Zum konkreten Material gilt das, was schon weiter oben gesagt wurde.

Die Verbindung der Holzelemente 141 untereinander kann wie in Fig. 13b und 13c gezeigt sein. Sie kann aber auch wie in Fig. 14b gezeigt sein. Das Fasermaterial umfasst hier miteinander verschlungene Einzelseile oder Fasern. In geeigneten Abständen sind die Holzelemente 141 zwischen die einzelnen Seile/Kardeele/Fasern geschoben und können nur so gehalten sein. Ergänzend kann aber auch wieder Klebstoff wie beschrieben vorhanden sein. Die Verbindung wie in Fig. 14b gezeigt, kann auch bei der Bauweise der Fig. 13a vorgesehen sein.

Die Fig. 15 zeigt mehrere Holzelemente 131, die mit mehreren Streifen 132-1, 132-2 von Fasermaterial zusammengehalten werden. Die Breite der einzelnen Streifen (in y-Richtung) ist kleiner als die Länge L der Holzelemente. Sie kann unter 40 oder 30 oder 20 oder 15 cm liegen. Sie kann über 2 oder 5 oder 10 cm liegen. Je nach Dimensionierung können mehrere solcher Streifen vorgesehen sein, beispielsweise zwei oder drei oder vier. Sie werden dann in geeignetem Abstand zueinander in y-Richtung beabstandet aufgebracht und mit den Holzelementen 131 verbunden.

Fig. 15 deutet an, dass ein nicht versponnenes, verfilztes, "chaotisches" Fasermaterial verwendet wird. Die Verbindung zu den Holzelementen 131 oder auch 141 (Fig. 14) kann wie in Fig. 13c gezeigt oder wie in Fig. 14b gezeigt erfolgt sein.

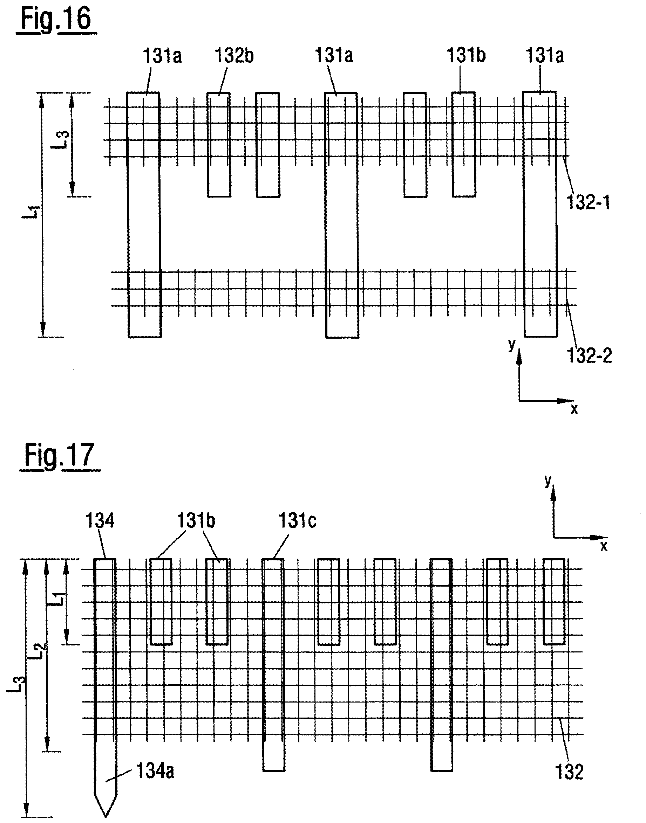

Die Fig. 16 und 17 zeigen, dass die Holzelemente unterschiedliche Längen L1, L2 und L3 haben können. Die Länge L1 kann dabei eine Länge sein, die der gewünschten Standhöhe der Verbissschutzvorrichtung entspricht. Es wird insoweit auf das verwiesen, was dazu zu den Ausführungsformen der Fig. 1 bis 12 gesagt wurde. Sie kann über 50 oder 80 oder 100 cm liegen. Sie kann unter 150 cm oder unter 100 cm liegen. Neben Holzelementen 131, 141 der Länge L1 können auch kürzere Holzelemente 131b (und ähnlich bei Fig. 14 zu Holzelementen 141) vorliegen. Sie können mit dem Fasermaterial auf geeigneter Höhe gehalten werden. Insbesondere können sie weitestmöglich oben gehalten werden, so dass die Oberkanten der kurzen Holzelemente 131b auf Höhe der Oberkanten der langen Holzelemente 131a liegen. Die Längen der kurzen Holzelemente 131b (in y-Richtung) ist mit L3 bezeichnet. Sie kann unter 50 oder 40 oder 30 oder 20 cm liegen. Sie kann über 5 oder 10 cm liegen.

Im Verbundmaterial kann die Anbringung so sein, dass einem bestimmten Muster folgend lange und kurze Holzelemente vorgesehen sind, beispielsweise nach jeweils einem langen Holzelement 131, 141 der Länge L1 eine Anzahl n kurzer Holzelemente 131b der Länge L3, mit n = 1, 2, 3, 4, 5 oder mehr.

Fig. 16 zeigt eine Ausführungsform, bei der zwei Streifen 132-1 und 132-2 von Fasermaterial verwendet werden. Ein oberer Streifen überdeckt sowohl die langen als auch die kurzen Holzelemente 131a, 131b. Ein unterer Streifen 132-2 kreuzt nur die langen Holzelemente 131a.

Fig. 17 zeigt eine Ausführungsform, bei der ein einziger breiter Streifen des Fasermaterials 132 verwendet wird. Er hat eine Breite entsprechend der Länge L1, also entsprechend der Länge der langen Holzelemente 131a in Fig. 16.

Darüber hinaus sind in Fig. 17 noch längere Holzelemente 134 einer Länge L2 vorgesehen. Sie können die langen Holzelemente 131a der Länge L1 nach unten überragen. Der Überstand ist dazu ausgelegt, in den Boden eingeschlagen zu werden. Er kann hierzu eine Spitze 134a aufweisen. Der Überstand nach unten kann größer als 5 oder 10 oder 20 cm sein. Er kann unter 50 oder 30 oder 20 cm sein.

Die Fig. 16 und 17 deuten verwobenes Fasermaterial 132 an. Es kann aber auch unversponnenes bzw. verfilztes, chaotisches Fasermaterial verwendet werden.

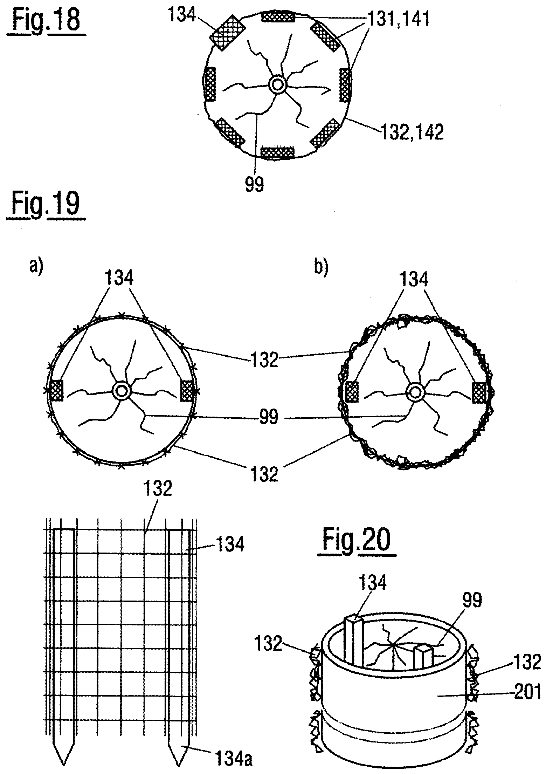

Fig. 18 zeigt in Draufsicht eine mit dem beschriebenen Verbundmaterial gefertigte Verbissschutzvorrichtung 180. Der Verbau kann in der Weise geschehen, dass Verbundmaterial wie bisher beschrieben einer gewünschten Länge in x-Richtung genommen und gegebenenfalls von einem gewerblichen Gebinde, etwa einer Rolle, abgelängt wird, also abgeschnitten wird. Die Länge wird so gewählt, dass sich mit ihr unter Einrechnung eines womöglich vorhandenen Überlapps 43 ein gewünschter Durchmesser ergibt. Zum Überlapp wird auf Ziffer 43 in den früheren Figuren verwiesen.

Je nachdem, wie die Holzelemente und ihre Abstände zueinander dimensioniert sind, wird dann eine bestimmte Anzahl von Holzelementen in einem abgelängten Stück des Verbundmaterials vorhanden sein. Wenn dieses dann wie in Fig. 18 gezeigt zusammengenommen wird, ergibt sich eine etwas eckige Grundform, die entsprechend der Anzahl n der Holzelemente 131 einen in etwa n-eckigen Grundriss hat. Die Holzelemente 131, 141 stehen in etwa senkrecht und umfangen den Schössling 99. Sie werden vom Fasermaterial 132, 142 zusammengehalten. Das Fasermaterial 132 kann innen oder außen liegen.

Es können eine oder mehrere einschlagbare Stützen 134 vorgesehen sein. Sie können schon in das Verbundmaterial eingearbeitet sein oder separat mitgebracht werden. Sie können die in Fig. 17 gezeigte Länge L2 haben und werden beim Verbau mit einem Hammer in den Boden eingeschlagen. Dann wird das Verbundmaterial daran befestigt, soweit es nicht schon befestigt ist, also z. B. an einem freien Ende in x-Richtung des Verbundmaterials oder auch irgendwo zwischen dessen Enden in x-Richtung. Das Befestigen kann durch Verknoten des Fasermaterials erfolgen oder durch Antackern des Fasermaterials an der Stütze 134 oder durch Antackern des Holzelements 131, 141 an der Stütze 134. Das Antackern geschieht vorzugsweise mit nicht verzinkten Metallklammern, also z. B. Klammern aus Schwarzeisen. Auch wenn Drähte verwendet werden, können diese aus Schwarzeisen bestehen.

Das Zusammenfassen des Verbundmaterials zu einer schützenden, die Pflanze 99 umgebenden Hülle kann in einer oder mehreren der folgenden Weisen geschehen:
- Auftackern oder Vernageln der in x-Richtung äußersten Holzelemente 131 aufeinander und/oder auf eine separate einschlagbare Stütze 134,
- Verknoten oder sonstiges Verbinden freier Enden in x-Richtung des Fasermaterials,
- Separates Zusammenfassen mittels eines oder mehrerer Seilringe oder Drahtringe außen um den Umfang herum,
- Gemeinsam mit dem Antackern oder Annageln oder Anbinden an einer einschlagstütze,
- Wie weiter oben zum Flachmaterial beschrieben.

Fig. 19 zeigt Ausführungsformen, bei denen Holzelemente nur als einschlagbare Stützen 134 vorgesehen sind und das Umfangen des Schösslings 99 ausschließlich mit dem Fasermaterial 132 geschieht. Diese Bauart kann gewählt werden, wenn das Fasermaterial in seiner Verarbeitung zu einer Matte steif genug ist, um den gewünschten Schutz über die gewünschte Dauer zu liefern. Fig. 19a deutet eine Bauweise an, bei der das Fasermaterial versponnen und zu einem Gitter- oder Netzgewebe verarbeitet ist. Es können zwei Einschlagstützen 134 vorgesehen sein, um die herum das Fasermaterial 132 geführt wird. Es kann aber auch nur eine Stütze 134 vorgesehen sein. Fig. 19b deutet die Verwendung eines nicht versponnenen, verfilzten, chaotischen Fasermaterials 132 an, das auch wieder wie in Fig. 19a an einer einschlagbaren Stütze 134 oder an zwei oder drei oder mehreren davon angebracht sein kann.

Das Fasermaterial in den Ausführungsformen der Fig. 19a und 19b kann eine Höhe (y-Richtung) entsprechend L1 in Fig. 16 und 17 haben. Es kann aber auch insoweit kürzer sein und beispielsweise zum Boden hin einen Bereich freilassen und nur einen oberen Bereich einer Pflanze 99 umfangen.

Als Handelsware kann das Fasermaterial 132, wie es in den Fig. 19a und 19b beschrieben ist, schon schlauchartig flach vorgefertigt sein, wie es auch in Fig. 3 angedeutet und dazu beschrieben ist. Es kann dann in dieser Weise aufgerollt werden. Die Wickelrichtung entspricht dann der vertikalen Richtung im verbauten Zustand. Die Ablängung erfolgt dann entsprechend der gewünschten Höhe des Fasermaterial-Schlauchs.

Merkmalskombinationen zu dieser Ausführungsform können die folgenden sein:
MK1. Matte für eine Verbissschutzvorrichtung 180, mit einem Fasermaterial 132, das natürlich und/oder biologisch abbaubar ist.
MK2. Matte 132 nach MK1, das versponnen und/oder verwebt und/oder verknotet ist und/oder das unversponnen und/oder verfilzt ist.
MK3. Matte 132 nach MK1 oder MK2, die schlauchartig zusammengefasst ist, wobei der Innenumfang des Schlauchs dem Innenumfang der zu fertigenden Verbissschutzvorrichtung 180 entspricht.
MK4. Verbissschutzvorrichtung 180 mit einer einschlagbaren Stütze und mit einer schlauchartig aufgespannten Matte 132 und wenigstens einem um die Matte 132 umlaufenden und daran befestigten Haltering 211.

Fig. 20 deutet ein Verfahren zum Verbauen des Fasermaterials bzw. einer damit gebildeten Matte zur Ausführungsform der Fig. 19a und 19b an und zeigt eine Hilfseinrichtung 201 hierfür an. Die Hilfseinrichtung 201 ist ein vergleichsweise starres Rohr beispielsweise aus Kunststoff oder Blech mit einer vergleichsweise glatten Außenoberfläche. Sein Außenumfang entspricht dem Innenumfang der zu fertigenden Verbissschutzvorrichtung. Die Länge kann mindestens die gewünschte Höhe der Verbissschutzvorrichtung sein.

Der Schlauch des Fasermaterials 132 wird außen auf das Hilfsrohr 201 aufgezogen. Es kann eine Skalierung von einem Ende her aufweisen, wenn die Ablängung des Schlauchs nach dem Aufziehen erfolgen soll. Dann, oder schon vor dem Aufziehen, wird das Hilfsrohr 201 mittig über den Schössling 99 gestellt. Als Nächstes werden die einschlagbaren Stützen 134 auf der Innenseite des Rohrs nahe an dessen Innenwand in den Boden eingeschlagen. Dann wird das Hilfsrohr 201 nach oben herausgezogen, wobei das Fasermaterial 132 festgehalten wird. Wenn das Hilfsrohr 201 entfernt ist, kann das Fasermaterial 132 geeignet an den einschlagbaren Stützen 134 befestigt werden, etwa wie oben beschrieben durch Antackern. Aber auch Verkleben ist möglich. In Fig. 20 ist das Fasermaterial 232 nur seitlich am Hilfsrohr 201 angedeutet, tatsächlich aber läuft es vollständig um dessen Umfang herum.

Alternativ kann die einschlagbare Stütze 134 auch längs der Außenwand des Hilfsrohrs 201 zwischen dieser und dem Innenumfang des Schlauchs des Fasermaterials 132 nach unten geführt und dann in den Boden eingeschlagen werden. Es kann dann das Fasermaterial 132 bzw. die Matte an der einschlagbaren Stütze 134 befestigt werden, bevor das Hilfsrohr nach oben herausgezogen wird. Das Hilfsrohr kann dann wieder als Montagehilfe beim nächsten Schössling verwendet werden.

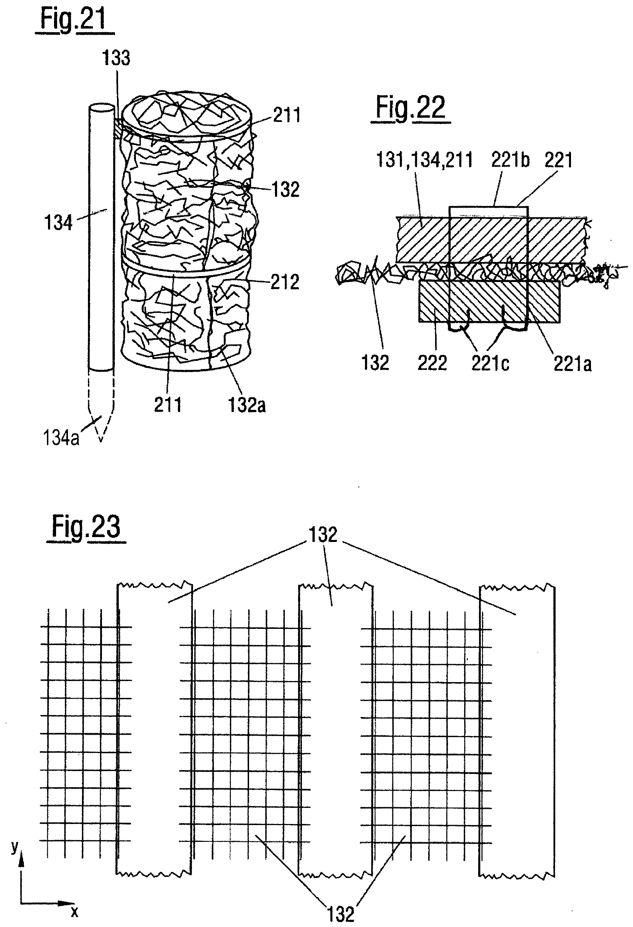

Fig. 21 zeigt eine Bauweise einer Verbissschutzvorrichtung, bei der ein Haltering 211 an das schlauchartige Fasermaterial 132 umlaufend um es angebracht ist. Mit 132a ist eine womöglich vorhandene Naht des Fasermaterial-Schlauchs 212 angedeutet. Der Ringdurchmesser entspricht in etwa dem Durchmesser des rund aufgespannten Schlauchs 212. Der Ring kann innen oder außen angebracht sein. Bei Anbringung innen kann der Ringaußendurchmesser in etwa dem Innendurchmesser des rund aufgespannten Schlauchs 212 entsprechen. Bei Anbringung außen kann der Ringinnendurchmesser in etwa dem Außendurchmesser des rund aufgespannten Schlauchs 212 entsprechen. Der Ring hält den Schlauch 212 offen.

Das Fasermaterial 132 und/oder der/die Ring/e 211 können an wenigstens einer einschlagbaren Stütze 134 befestigt sein. Die Befestigung insbesondere des Fasermaterials 132 kann mit einer der beschriebenen Befestigungseinrichtungen bzw. -techniken (Kleben, Klammern, Einflechten) erfolgen.

Auf geeigneter Höhe L der Verbissschutzvorrichtung kann ein Ring 211 vorgesehen sein, dann vorzugsweise oben oder im oberen Fünftel. Es können auch mehrere in Höhenrichtung beabstandete Ringe 211 vorgesehen sein, z. B. ein zweiter in etwa auf "halber Höhe" wie in Fig. 21 angedeutet.

Der Haltering 211 besteht aus natürlich/biologisch abbaubarem Material. Es können natürlich gewachsene Ruten, z. B. Weidenruten sein. Eine einzelne lange Rute (Länge = mehrfacher Umfang) kann mit sich selbst verschlagen werden.

Diese Bauweise kann mit nur wenigen senkrechten Holzelementen 131, 134 gewählt werden. Das Fasermaterial 132 wird dann von dem Ring 211 offengehalten. Wenigstens eines kann als einschlagbare Stütze 134 vorhanden sein. Davon können auch zwei oder drei oder vier oder mehr über den Umfang verteilt sein. Es können auch zwei oder drei oder vier oder mehr nicht einschlagbare Holzelemente 131 über den Umfang verteilt vorhanden sein. Fig. 21 deutet chaotisch/verfilztes Fasermaterial 132 an. Es kann aber auch versponnen und/oder verwoben und/oder verknotet sein.

In einer weiteren Ausführungsform kann der Ring 211 oben auf der Stirnfläche von zwei oder mehreren einschlagbaren Pfosten 134 aufliegen. Die schlauchartig zusammengefasste Matte wird von unten innen nach oben, dann außen und wieder unten um den Ring herum geführt. Es kann an den einschlagbaren Pfosten 134 befestigt werden. Weiter kann es an dem Stützring 211 befestigt werden, bspw. Durch Anbinden mit einem verrottenden Material, etwa Kokosseil.

Fig. 22 zeigt eine mögliche Verbindung, die umgangssprachlich als Klammern oder Tackern bezeichnet wird. Sie kann zwischen zwei Holzelementen 131 (auch einschlagbare Stütze 134, Ring 211) oder zwischen Fasermaterial 132 gleich welcher Aufbereitung (geflochten, geschlagen, verknotet, unaufbereitet, chaotisch, verfilzt) und Holzelement 131, einschlagbarer Stütze 134, Ring 211 vorhanden sein. Eine Klammer 221 mit zwei Schenkeln 221a und einem Querbügel 221b ist wenigstens durch Holzelement 131 oder einschlagbarer Stütze 134 oder Ring 211 und das Fasermaterial getrieben. Die Schenkelenden 221c können herausragen und zurückgebogen sein. Die Länge der Schenkel 221a kann über 5 oder 10 mm liegen. Sie kann unter 30 oder 20 mm liegen. Die Breite des Querbügels kann über 5 oder 10 mm liegen. Sie kann unter 20 oder 15 mm liegen. Statt Klammern mit zwei Schenkeln können aber auch Klammern mit nur einem Schenkel oder Nägel verwendet werden. Nägel können Köpfe haben, die ähnlich Dachpappenägeln verglichen zum Schaft vergleichsweise breit sind, z. B. mit Kopfdurchmesser mindestens 4 oder 7 oder 10 oder 20 mm größer als Schaftdurchmesser. Eine Verleimung kann entfallen, wenn Klammern oder Nägel verwendet werden oder kann zusätzlich vorgesehen sein.

Wenn Fasermaterial 132 - verfilzt oder geflochten oder geschlagen oder vernetzt - befestigt werden soll, kann außerdem ein Konterholzstück 222 auf der anderen Seite des Fasermaterials 132 vorgesehen sein, das auch noch von den Schenkeln 221a oder dem Nagel durchdrungen und dann gehalten wird und so das Fasermaterial flächig einklemmt und hält. Anders als gezeigt kann der Querbügel 221b der Klammer 221 auf Seiten des Fasermaterials 132 bzw. des Konterholzes 222 liegen, die Schenkel 221a laufen in Richtung Holzelement 221. Es können auch zwei Klammern oder Nägel von gegenüber liegenden Seiten eingetrieben werden. Die Klammern oder Nägel bestehen aus natürlich abbaubarem Material, z. B. Eisen ohne Verzinkung. Das Konterholzstück kann deutlich kleiner als das gegenüberliegende Holzelement sein und wird nach Festigkeitsaspekten gewählt. Mögliche Maße sind 10 mm ^{∗} 40 mm ^{∗} 100 mm, jeweils ± 50%.

Eine Verbissschutzvorrichtung kann bspw. als Holzelemente vier oder fünf oder sechs Schindeln/Dünnbretter etwa rechteckiger Form in der Länge zwischen 90 und130 cm mit Materialstärke zwischen 1 und 4 mm aufweisen. Die Breite der Schindeln/Dünnbretter kann nach Maßgabe des gewünschten Durchmessers der fertigen Verbissschutzvorrichtung und der Zahl der verwendeten Schindeln/Dünnbretter gewählt sein. Sie kann zwischen 5 und 15 cm liegen. Sie können im Abstand zueinander von zwischen 4 und 15 mm von zwei oder drei oder vier Kokos- oder Sisalschnüren mit einer Materialstärke von zwischen 4 und 15 mm mechanisch zusammengehalten werden. Statt Schnüren können auch Streifen Fasermaterials verwendet werden, die gewebt oder geknotet oder verfilzt/chaotisch sein können und die z. B. zwei oder drei Streifen einer Breite von zwischen 2 und 12 cm umfassen können, die jeweils alle Schindeln/Dünnbretter kreuzend angeordnet und an allen Kreuzungen mit den Schindeln/Dünnbrettern verbunden sind, vorzugsweise durch Klammern oder Nägel wie beschrieben.

Beim Verbau kann das Verbundmaterial an eine separat vorgesehene einschlagbare Stütze 134 angeklammert (getackert) oder angenagelt werden. Es kann mittels verrottender Schnüre oder Draht zusammengehalten werden. Es kann wie anhand der Figuren 9 bis 12 beschrieben erfolgen. Es können auch freie Enden des Fasermaterials zum rohrartigen Zusammenhalten verwendet werden, etwa indem diese an eine einschlagbare Stütze 134 angeklammert (getackert) oder angenagelt oder miteinander oder mit einem Holzelement 131 verbunden werden. Beim Verbau können einige der Holzelemente 131 mit Abstand zum Boden gehalten sein, etwa mit Abstand größer als 2 oder 5 oder 10 cm.

Die einschlagbare Stütze 134 steht in der nördlichen Hemisphäre vorzugsweise im nördlichen Quadranten der zu schützenden Pflanze, also im Winkelbereich zwischen Nordwest und Nordost, um Abschattungen weitgehend zu vermeiden. In der südlichen Hemisphäre steht sie vorzugsweise im südlichen Quadranten.

Es können mehrere Klammern und/oder Nägel, auch als "Verbinder" angesprochen, etwa vier oder fünf oder sechs, an jeder Kreuzung von Fasermaterial und Holzelement eingetrieben werden. Schnur oder Faserstreifen können im verbauten Zustand an der Innenseite der Verbissschutzvorrichtung oder an ihrer Außenseite liegen.

Fig. 23 zeigt ein Verbundmaterial mit mehreren in x-Richtung beabstandeten Streifen Fasermaterials 132, von denen jeder den Freiraum zwischen je zwei benachbarten Holzelementen 131, 134 überbrückt und diese Holzelemente 131, 134 selbst an ihren Rändern, aber nicht über deren gesamte Breite in x-Richtung überdeckt. An den überdeckten Rändern werden Holzelemente 131, 134 und Fasermaterial 132 miteinander verbunden. Auch eine einschlagbare Stütze 134 kann so angebunden werden. Fig. 23 deutet versponnenes und/oder verwobenes und/oder verknotetes Fasermaterial 132 an. Es kann aber auch chaotisch/verfilzt sein.

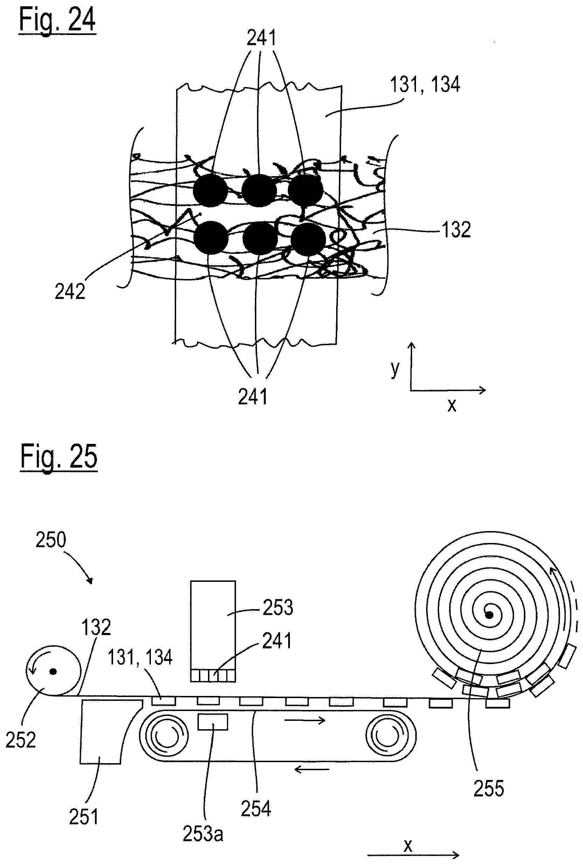

Im Folgenden werden anhand Fig. 24 eine Verbindevorrichtung 241 und anhand Fig. 25 eine Fertigungsvorrichtung 250 für das Verbundmaterial beschrieben. Die Verbindevorrichtung dient dem Verbinden von Holzelement 131, 134 und Fasermaterial132 und ggf. Konterholz 222 miteinander, wie es allgemein oben beschrieben ist. Sie benützt zum Verbinden Klammern 221 und/oder Nägel. Sie hat vorzugsweise als mechanisch feste Baueinheit mehrere Köpfe 241, die als schwarze Kreisscheiben symbolisiert sind und die gemeinsam und vorzugsweise automatisch angesteuert werden und dazu ausgelegt sind, in eine Kreuzung 242 von Holzelement 131, 134 und Fasermaterial 132 und ggf. Konterholz 222 gleichzeitig je einen Verbinder (Nagel oder Klammer 221) einzutreiben. Dies kann elektrisch oder pneumatisch angetrieben geschehen. Über einer Kreuzung 242 können also beispielsweise zwei oder drei oder vier oder fünf oder sechs Köpfe 241 stehen bzw. positioniert werden, die dann gleichzeitig über die Kreuzung 242 geeignet verteilt sechs Nägel oder Klammern anbringen und eintreiben. Die Verbindevorrichtung kann ein nicht gezeigtes geeignetes Widerlager auf der anderen Seite des zu fertigenden Verbundmaterials aufweisen, das auch die Schenkelenden 221 c wie in Fig. 22 gezeigt zurückbiegen kann. Wenn ein Holzelement 131, 134 mehrere Streifen Fasermaterials 132 kreuzt, kann die Verbindevorrichtung über jeder Kreuzung 242 mehrere Köpfe 241 aufweisen, die dann alle gemeinsam automatisch angesteuert werden.

Kurz und knapp kann die Verbindevorrichtung als mit mehreren Köpfen, die dazu ausgelegt sind, in eine Kreuzung von Holzelement und Fasermaterial und ggf. Konterholz gleichzeitig je einen Verbinder einzutreiben, ausgestattet beschrieben werden.

Eine Fertigungsvorrichtung 250 ist für ein Verbundmaterial vorzugsweise wie oben beschrieben vorgesehen. Sie hat eine erste Zuführvorrichtung 251 zum Zuführen länglicher Holzelemente 131, 134 aus einem Vorrat oder Magazin zu einer Arbeitsstelle 259 derart, dass die Holzelemente 131, 134 in Querrichtung (x-Richtung in Fig. 13) quer zu ihrer Längsrichtung (y-Richtung in Fig. 13) voneinander beabstandet sind.

Eine zweiten Zuführvorrichtung 252 dient dem Zuführen eines oder mehrerer Streifen Fasermaterials 132 zu der Arbeitsstelle 259 derart, dass die Streifen sich, wenn sie zugeführt sind, in Querrichtung (y-Richtung in Fig. 13) erstrecken und ggf. voneinander in Längsrichtung (x-Richtung in Fig. 13) beabstandet sind und die zugeführten Holzelemente 131, 134 kreuzen und vorzugsweise dort aufliegen. Die zweite Zuführvorrichtung 252 kann z. B. geeignet positionierte Rollen von Fasermaterialstreifen aufweisen, von denen das Fasermaterial im Arbeitsfortgang heruntergezogen wird.

Eine weitere, nicht gezeigte Zuführvorrichtung kann vorgesehen sein, um Konterhölzer 222 geeignet zuzuführen. In Fig. 25 kann sie die Konterhölzer 222 von oben auflegen.

An der Arbeitsstelle 259 ist eine Verbindevorrichtung 253 ggf. auch mit Widerlager 253a zum Verbinden von Holzelement 131, 134 und Fasermaterial 132 an ihrer Kreuzung 242 vorgesehen, um so das Verbundmaterial herzustellen. Die Verbindevorrichtung 253 ist vorzugsweise wie oben beschrieben ausgebildet und kann mehrere Köpfe 241 als Baueinheit aufweisen. Sie kann beweglich sein, etwa reversierend, so dass sie beim Eintreiben der Verbinder zeitweise mit dem Material gleich schnell mitgeführt und dann wieder zurückbewegt werden kann.

Eine Transportvorrichtung 254 dient dem Transportieren der zugeführten Holzelemente und Fasermaterialstreifen über die Arbeitsstelle 259 hinweg und von ihr fort, wenn sie miteinander verbunden sind. Die Pfeile deuten die Transportrichtung an. Der Transport kann durch Ziehen weg von der Arbeitsstelle erfolgen. Das Ziehen kann das Abwickeln des Fasermaterials von den Vorratsrollen bewirken. Die Transportvorrichtung 254 kann auch ein oder mehrere angetriebene oder passiv mitlaufende Förderbänder aufweisen.

Die Fertigungsvorrichtung kann zur Arbeit im Quasi-Endlosbetrieb ausgelegt sein, indem fortlaufend Holzelemente 131, 1134 und Fasermaterialstreifen 132 zugeführt, miteinander verbunden und im Verbund als Endlos-Verbundmaterial abtransportiert werden.

Es kann eine Konfektioniervorrichtung 255 vorgesehen sein, die das Verbundmaterial nach seinem Abtransport von der Arbeitsstelle geeignet konfektioniert. Sie kann eine angetriebene Wickelvorrichtung aufweisen, die das Quasi-Endlos-Verbundmaterial zu Rollen aufwickelt, oder eine Schneid- und Stapelvorrichtung, die das Endlos-Verbundmaterial geeignet ablängt (z. B. nach jeweils vier oder fünf oder sechs Holzelementen 131, 134) und die Einzelteile in gewünschten Mengen stapelt.

Die Fertigungsvorrichtung 250 kann Verbundmaterial wie bspw. in den Figuren 15 bis 17 gezeigt fertigen. Es können Holzelemente unterschiedlicher Länge eingebunden werden, etwa indem sie entsprechend dem gewünschten Muster in dem der ersten Zuführvorrichtung zugänglichen Vorrat eingelegt sind. Beispielsweise kann jedes vierte oder fünfte oder sechste Holzelement länger als die übrigen Holzelemente sein und am die anderen Holzelemente überragenden Ende mit einer Spitze versehen sein, so dass es beim Verbau in den Boden eingeschlagen werden kann.

Die beschriebenen Komponenten können elektrisch und/oder pneumatisch angetrieben sein. Sie können elektrisch, elektronisch und digital zueinander synchronisiert und aufeinander abgestimmt steuerbar bzw. regelbar sein. Sie können eine gemeinsame überlagerte, nicht gezeigte Steuerung aufweisen, die mit geeigneter Sensorik und Aktorik verbunden ist. Die Ansteuerung und Dimensionierung ist so, dass das Verbundmaterial mit den gewünschten Dimensionen entsteht.

Kurz und knapp kann die Fertigungsvorrichtung 250 so beschrieben werden: Sie ist für das beschriebene Verbundmaterial vorgesehen und hat eine ersten Zuführvorrichtung zum Zuführen länglicher Holzelemente zu einer Arbeitsstelle derart, dass die Holzelemente in Querrichtung quer zu ihrer Längsrichtung voneinander beabstandet sind, eine zweiten Zuführvorrichtung zum Zuführen mehrerer Streifen Fasermaterials zu der Arbeitsstelle derart, dass sie sich in Querrichtung erstrecken und in Längsrichtung voneinander beabstandet sind und die zugeführten Holzelemente kreuzen, an der Arbeitsstelle eine Verbindevorrichtung zum Verbinden von Holzelement und Fasermaterial an ihrer Kreuzungsstelle, und eine Transportvorrichtung zum Transportieren der zugeführten Holzelemente und Fasermaterialstreifen über die Arbeitsstelle hinweg und von ihr fort.

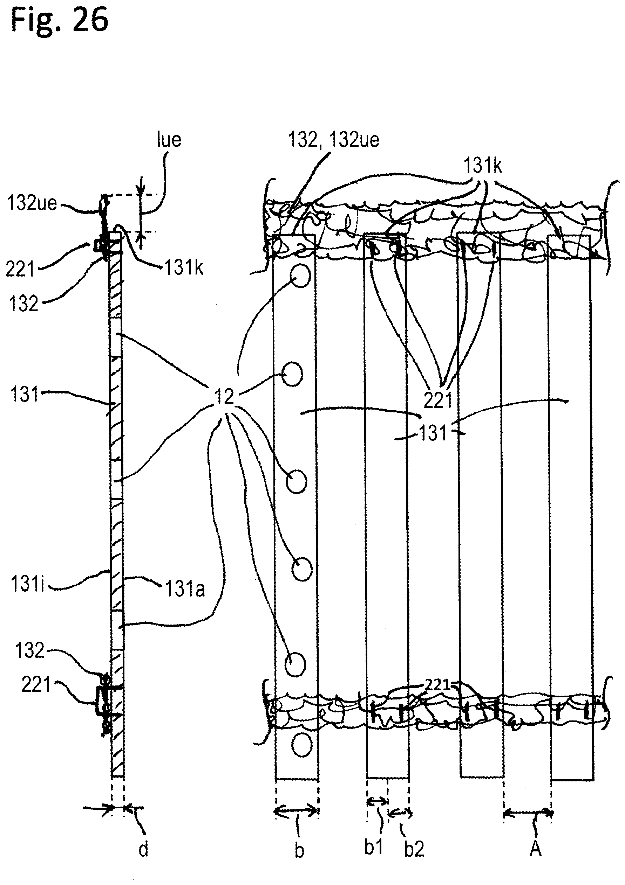

Fig. 26 zeigt links im Schnitt und rechts in Draufsicht schematisch kombiniert mehrere weitere Merkmale der Erfindung, die aber nicht notwendig in der gezeigten Kombination verwirklicht sein müssen, sondern auch jeweils separat und ggf. kombiniert mit anderen kombinierbaren Merkmalen, die in dieser Beschreibung dargestellt sind, verwirklicht sein können. Die Zeichnung ist nicht maßstäblich.

Die Holzelemente 131 können brettartig bzw. schindelartig ausgebildet sein. Sie können jeweils, wie schon gesagt, Dimensionen entsprechend Dicke d, Breite b und Höhe L, L1, L2, L3 aufweisen. Sie können so als "Schindeln" angesprochen werden. Allerdings muss es sich bei ihnen nicht um präzise definierte Bretter handeln. Sie müssen nicht strikt eben sein, sondern können wellig oder gebogen sein. Die Kanten und Oberflächen können ganz oder teilweise natürlichen Strukturen folgen, etwa der Holzmaserung, bspw. auch als Bruch- oder Risskanten. Angaben von Dicke d, Breite b, Höhe L, L1, L2, L3 und Abstand A können dann nur ungefähre Maße bzw. statistisch richtige Maße sein und müssen auch innerhalb einer Schindel bzw. zwischen zwei Schindeln nicht konstant sein.

Das Verbundmaterial für eine Verbissschutzvorrichtung kann Schindeln unterschiedlicher Breite b (in Umfangsrichtung gesehen) aufweisen, insbesondere solche einer ersten Breite b1 und solche einer kleineren zweiten Breite b2. Herstellungstechnisch können vor dem Verbinden der Schindeln breite Schindeln der Breite b1 der Länge nach in je zwei schmale Schindeln der Breite b2 halbiert oder je drei schmale Schindeln der Breite b3 gedrittelt werden, bspw. durch Sägen, Stanzen, Schneiden, Brechen, Lasern o.ä.. Die Breite bs der schmaleren Schindeln kann unter 70 oder 60 oder 52 oder 40% der Breite b1 der breiteren Schindeln liegen. Sie kann über 30 oder 40 oder 47 oder 60% der Breite b1 der breiteren Schindeln liegen. In Fig. 26 sind die Maße b, b1, b2 schematisch angedeutet.

Die Anzahl der breiten Schindeln B und der schmalen Schindeln S im Verbundmaterial für eine Verbissschutzvorrichtung kann 3, 4 oder mehr sein. Sie kann 10, 8 oder weniger sein. Sie kann 4 oder 5 oder 6 sein. Die Folge der breiten Schindeln B und der schmalen Schindeln S im Verbundmaterial für eine Verbissschutzvorrichtung kann z. B. abwechselnd B-S-B-S oder B-S-B-S-B-S sein oder kann z. B. B-S-S-S-S-B oder B-S-S-B-S-S sein. Allgemein können die außenliegenden - d.h. in den obigen Schemen ganz links und ganz rechts - liegenden Schindel die breiteren sein, die anderen die schmaleren. Die außenliegenden Schindeln können beim Verbau an einer Einschlagstütze 134 befestigt werden. Wenn breitere und schmalere Schindeln vorgesehen sind, können die weiter oben bezifferten Maßbereiche für die breiteren von ihnen gelten.

Die Einschlagstütze 134 kann ein Rundholz oder ein Pfosten oder ein Kantholz sein. Die Größe der Querschnittsfläche der Einschlagstütze 134 kann über 3 oder 6 oder 10 cm² liegen. Sie kann unter 80 oder 40 oder 20 cm² liegen. Es kann aber auch eine der im Verbundmaterial eingebundenen Schindeln 131 als Einschlagstütze 134 ausgebildet sein. Sie ist dann länger als die übrigen Schindeln 131 und am Unterende womöglich spitz zulaufend geformt.

Es ist auch möglich, ein Verbundmaterial 130 wie beschrieben gleich anfänglich vor dem Verbau an der zu schützenden Pflanze mit einer Einschlagstütze 134 zu verbinden, etwa indem eine der Schindeln 131, z. B. eine der außenliegenden, oder ein freies Ende des die Schindeln verbindenden Fasermaterials 132 mit der Einschlagstütze 134 verbunden wird, etwa durch Antackern.

Im Hinblick auf eine gute Kombination aus Belichtung der geschützten Pflanzen, Stabilität des Aufbaus und Schutzwirkung hat sich die obige Kombination B-S-S-S-S-B breiter und schmaler Schindeln als vorteilhaft erwiesen. Mit den breiten Schindeln wird das Verbundmaterial an eine Einschlagstütze angebracht, bspw. durch Tackern, und die schmaleren schützen und lassen zwischen sich genügend Raum für Licht.

Ein Verfahren zum Schützen einer Pflanze umfasst das Bereitstellen eines Flachmaterials 10 oder eines Verbundmaterials 130 wie beschrieben, das Einschlagen einer Einschlagstütze 134 im Boden in der Nähe der zu schützenden Pflanze, und das Anbringen des Flachmaterials 10 oder des Verbundmaterials 130 mit beiden Enden vor oder nach dem Einschlagen der Einschlagstütze 134 so, dass es die zu schützenden Pflanze umgibt. Die Einschlagtiefe kann über 5 oder 10 oder 20 cm liegen. Der Abstand der Einschlagstütze 134 von der zu schützenden Pflanze kann über 2 oder 3 oder 4 cm liegen. Er kann unter 10 oder 7 cm liegen. Das Einschlagen der Einschlagstütze 134 im Boden geschieht in der nördlichen Hemisphäre vorzugsweise im nördlichen Quadranten der Pflanze, also im Winkelbereich zwischen Nordwest und Nordost, um keine weitere Abschattung zu bewirken. In der südlichen Hemisphäre erfolgt es im südlichen Quadranten.

In einzelnen, mehreren oder allen Schindeln, insbesondere nur in den breiteren, können jeweils eine oder mehrere Öffnungen 12 vorgesehen sein, die durch Sägen, Stanzen, Schneiden, Lasern o.ä. gefertigt sein können. Ihre Fläche kann über 5 oder 10 oder 20 oder 25 cm² liegen. Sie kann unter 100 oder 70 oder 50 oder 30 cm² liegen. Ihre Form kann rund oder oval oder eckig oder schlitzartig länglich sein. Pro Schindel können mehr als 1, 2 oder 5 Öffnungen vorgesehen sein. Es können weniger als 20 oder 10 oder 5 sein. Die Öffnungen 12 bewirken eine bessere Belichtung der geschützten Pflanzen.

Eine Verbissschutzvorrichtung mit dem beschriebenen Verbundmaterial kann eine "weiche Oberkante" aufweisen. Der Sinn dieser Konstruktion ist es, das Aufscheuern junger Triebe, die nach oben aus der Verbissschutzvorrichtung herausragen, an deren Oberkante zu vermeiden, etwa wenn Wind oft oder regelmäßig solches Scheuern bewirken würde. Die weiche Oberkante kann dadurch gefertigt werden, dass oben an ein Holzelement 131 ein Stück oder oben über mehrere Holzelemente 131 hinweg ein Streifen 132 nachgiebigen Materials, bspw. des die Schindeln 131 verbindenden Fasermaterials 132 , vorzugsweise im Verbau auf der Innenseite 131i und vorzugsweise umlaufend so angebracht wird, dass das nachgiebige Material, insbesondere also das Fasermaterial 132, die Oberkante 131k der Holzelemente 131 bzw. Schindeln nach oben überragt. Es kann aber auch an der Außenseite 131a angebracht sein.

Die Länge lue des Überstands 132ue nach oben über die Oberkante 131k eines Holzelements 131 hinaus kann mehr als 5 oder 10 oder 20 mm sein. Er kann unter 50 oder 20 mm sein. Das Anbringen kann durch Tackern oder Kleben erfolgen. Auf diese Weise kommen Pflanzenteile mit dem nachgiebigen Fasermaterial 131 in Kontakt und nicht oder jedenfalls weniger mit der Oberkante 131k der Verbissschutzvorrichtung, so dass das Aufscheuern deutlich reduziert ist. Das Verbundmaterial kann dann insbesondere zwei oder drei umlaufende Streifen 132 aufweisen, deren oberer nach oben den Überstand 132ue aufweist.

In Breitenrichtung können pro "Kreuzung" von Fasermaterialstreifen 132 und Holzelement 131 nur zwei Klammerpositionen für Klammern 221 vorgesehen sein, die jeweils näher an der Kante der Schindel 131 als an deren Mittenlinie liegen, wie in fig. 26 rechts oben angedeutet. Die hat sich als günstig im Hinblick auf Ausdehnungs- und Schrumpfungsverhalten bei wechselnder Nässe bzw. Feuchte der Materialien erwiesen.

Die in dieser Beschreibung und in den Ansprüchen beschriebenen oder in einer Abbildung dargestellten Merkmale sollen auch dann als untereinander kombinierbar gelten, wenn ihre Kombination nicht ausdrücklich beschrieben ist, soweit die Kombination technisch möglich ist. Merkmale, die in einer/m bestimmten Kontext, Ausführungsform, Figur oder Anspruch beschrieben sind, sollen auch als von diesem Anspruch, Kontext, Ausführungsform oder Figur trennbar und als mit jeder anderen Figur, Anspruch, Ausführungsform oder Kontext kombinierbar angesehen werden, soweit dies technisch möglich ist. Ausführungsformen und Figuren sollen nicht als notwendigerweise ausschließlich gegeneinander verstanden werden. Beschreibungen eines Verfahrens oder eines Ablaufs oder eines Verfahrensschritts oder eines Ablaufschritts sind auch als Beschreibung von Einrichtungen und/oder Gegenständen zu verstehen, die für die Implementierung des Verfahrens oder des Ablaufs geeignet sind, und umgekehrt.

### Bezugszeichenliste

- 10: Flachmaterial
- 11: Material
- 11a, 11b: Materialkanten
- 12: Öffnung
- 14: Löcher
- 20: Rolle
- 30: Stützpfosten
- 35: Schnur
- 40: Verbissschutzvorrichtung
- 41a,41b: Kanten
- 42: Stift
- 43: Überlapp
- 99: Pflanze
- 130: Verbundmaterial
- 131,141: Holzelemente
- 131k: Oberkante
- 132,142: Fasermaterial
- 132ue: Überstand
- 133: Verbindung
- 134: einschlagbare Stütze
- 201: Hilfseinrichtung
- 211: Haltering
- 221: Klammer
- 222: Konterholz
- 241: Kopf
- 242: Kreuzung
- 250: Fertigungsvorrichtung
- 251: erste Zuführvorrichtung
- 252: zweite Zuführvorrichtung
- 253: Verbindevorrichtung
- 254: Transportvorrichtung
- 255: Konfektioniervorrichtung

## Patentansprüche

1. Verbundmaterial (130) für eine Verbissschutzvorrichtung (180), mit
mehreren länglichen, nebeneinander angeordneten Holzelementen (131, 134, 141),
mindestens einem Streifen Fasermaterial (132, 142), der wenigstens zwischen zwei Holzelementen (131, 134, 141) und diese zwei Holzelemente wenigstens teilweise überdeckend angeordnet ist, und
Verbindungen (133) an den Überdeckungen der Holzelemente (131, 134, 141) und des Fasermaterials (132, 142),
wobei die Holzelemente und das Fasermaterial und die Verbindungen natürlich und/oder biologisch abbaubar sind.

2. Verbundmaterial (130) nach Anspruch 1, bei dem die Holzelemente (131) flach ausgebildet sind und eine Dicke haben, die unter 5 oder 4 oder 3 mm liegt und die über 0,5 oder 1 mm liegt, und rechteckigen Grundriss haben können.

3. Verbundmaterial (130) nach Anspruch 1 oder 2, bei dem die Holzelemente (131) Holzbretter und/oder Spankistenholz und/oder Schindelholz und/oder Spanplatten sind oder aufweisen.

4. Verbundmaterial (130) nach einem der vorherigen Ansprüche, bei dem die Holzelemente voneinander einen Abstand (A) haben, der wenigstens 5 oder 10 oder 20 oder 50 mm ist und der höchstens das Dreifache oder das Doppelte oder das Einfache der Breite (b) eines Holzelements (131, 134, 141) sein kann.

5. Verbundmaterial (130) nach einem der vorherigen Ansprüche, bei dem das Fasermaterial (132, 142) Naturfasern sind oder aufweist, insbesondere Fasern von Jute und/oder Sisal und/oder Kokos und/oder Hanf und/oder Bast und/oder Wolle und/oder Rindenstreifen und/oder Produktionsabfällen, wobei das Fasermaterial (132, 142) verwoben und/oder versponnen und/oder verknotet sein kann, insbesondere zu einem Seil (142) und/oder zu einem Gewebe (132), insbesondere einem Netz (132a, 132b), oder wobei das Fasermaterial (132, 142) unversponnen und/oder verfilzt verwendet ist.

6. Verbundmaterial (130) nach einem der vorherigen Ansprüche, mit mehreren Streifen des Fasermaterials (132, 142), die beabstandet voneinander liegen und jeweils eine Breite kleiner als die Länge eines Holzelements (131, 134, 141) haben.

7. Verbundmaterial (130) nach einem der vorherigen Ansprüche, bei dem die Verbindungen (133) ein Klebstoff sind oder ihn aufweisen und/oder Klammern (221) sind oder aufweisen.

8. Verbundmaterial (130) nach einem der vorherigen Ansprüche, bei dem ein Holzelemente (131, 134, 141) und/oder Fasermaterial (132, 142) und/oder eine Verbindung (133) mit einem die Verwitterung beeinflussenden Stoff bearbeitet und/oder bestrichen und/oder getränkt sind.

9. Verbundmaterial (130) nach einem der vorherigen Ansprüche, bei dem ein Holzelemente (131, 134, 141) und/oder Fasermaterial (132, 142) und/oder eine Verbindung (133) mit einem Vergrämungsmittel bearbeitet und/oder bestrichen und/oder getränkt sind.

10. Verbundmaterial (130) nach einem der vorherigen Ansprüche, bei dem wenigstens ein Streifen Fasermaterial (132, 142) mehrere Holzelemente (131, 134, 141) überkreuzend angeordnet ist.

11. Verbundmaterial (130) nach einem der vorherigen Ansprüche, bei dem ein Streifen Fasermaterial (132, 142) den Freiraum zwischen zwei benachbarten Holzelementen (131, 134, 141) überbrückt und diese Holzelemente selbst an ihren Rändern überdeckt.

12. Verbundmaterial (130) nach einem der vorherigen Ansprüche, bei dem wenigstens ein Stück oder ein Streifen Fasermaterial (132, 142) mit einem die Oberkante (131k) eines oder mehrerer Holzelemente (131, 134, 141) überragenden Überstand (132ue) versehen ist.

13. Verbundmaterial (130) nach einem der vorherigen Ansprüche, mit einer oder mehreren Öffnungen (12) in einem oder mehreren oder jedem der Holzelemente (131).

14. Verbundmaterial (130) nach einem der vorherigen Ansprüche, mit mehreren voneinander beabstandeten Schindeln als Holzelemente (131), die unterschiedliche Breiten (b, b1, b2) haben können.

15. Verbissschutzvorrichtung (180) mit einem Verbundmaterial (130) nach einem der vorherigen Ansprüche und mit einem oder zwei oder drei oder mehreren einschlagbaren Stützpfosten (41, 134).
